# EUROPÄISCHE PATENTSCHRIFT

(11) **EP 3 170 722 B1**
(45) Veröffentlichungstag und Bekanntmachung des Hinweises auf die Patenterteilung: **02.09.2020**
(21) Anmeldenummer: 16002453.5
(22) Anmeldetag: 18.11.2016
(51) Int. Cl.: B62D 65/12, B62D 65/10

(54) **VERFAHREN UND VORRICHTUNG ZUR MONTAGE EINES FAHRZEUGS, INSBESONDERE EINES NUTZFAHRZEUGS**
METHOD AND DEVICE FOR OPERATING A VEHICLE, IN PARTICULAR A COMMERCIAL VEHICLE
PROCÉDÉ ET DISPOSITIF DE MONTAGE D'UN VÉHICULE, EN PARTICULIER UN VÉHICULE UTILITAIRE

(30) Priorität: 21.11.2015 DE 102015015104
(43) Veröffentlichungstag der Anmeldung: 24.05.2017
(73) Patentinhaber: MAN Truck & Bus SE, 80995 München (DE)
(72) Erfinder: Burger, Norbert, 84030 Ergolding (DE); Ulverich, Michael, 85375 Neufahrn bei Freising (DE); Shahid, Pedram, 80997 München (DE); Wirth, Thomas, 85229 Indersdorf (DE); Kummet, Simon, 82194 Gröbenzell (DE)
(74) Vertreter: Liebl, Thomas

(56) Entgegenhaltungen:
- EP-A1- 0 751 061
- WO-A1-2010/038629
- GB-A- 2 472 552
- JP-A- S61 115 784
- US-A1- 2007 180 675
- US-B1- 6 226 848

## Beschreibung

Die Erfindung betrifft ein Verfahren zur Montage eines Fahrzeugs, insbesondere eines Nutzfahrzeugs, nach Patentanspruch 1, eine Vorrichtung zur Montage eines Fahrzeugs, insbesondere eines Nutzfahrzeugs, nach Patentanspruch 13 sowie eine Positionierungseinheit nach Patentanspruch 14.

Zur Montage von Radachsen und Fahrwerkskomponenten an einem Fahrgestellrahmen bzw. an einem Chassis eines Nutzfahrzeugs, insbesondere eines Lastkraftwagens, wird der Fahrgestellrahmen häufig rücklings angeordnet, so dass sich eine Oberseite des Fahrgestellrahmens, in Vertikalrichtung gesehen, unterhalb einer Unterseite des Fahrgestellrahmens befindet. Zudem werden die Radachsen eines Nutzfahrzeugs zeitlich nacheinander bzw. hintereinander an den Fahrgestellrahmen montiert. Eine Ursache für diese Art der Montage ist die anlagenseitig schwierige bzw. aufwändige Befestigung der Nutzfahrzeug-Radachse an dem Fahrgestellrahmen. Eine Nutzfahrzeug-Radachse weist üblicherweise eine große Anzahl an Verbindungspunkten auf, an denen sie mit dem Fahrgestellrahmen verbunden wird. Diese radachsenseitigen Verbindungspunkte können beispielsweise Anlenkpunkte für Stoßdämpfer, Längslenker oder Querlenker des Nutzfahrzeugs sein. Die Montage der Radachsen zeitlich nacheinander ist jedoch zeitintensiv. Zudem ist die Anordnung des Fahrgestellrahmens rücklings aufwändig und ebenfalls zeitintensiv.

Aus der WO 2010/038629 A1 ist ein Verfahren zur Montage eines Fahrzeugs bekannt, wobei ein Chassis des Fahrzeugs mit einem Fahrwerkmodul verbunden wird, das mehrere Radachsen aufweist.

Die US 2007/0180675 A1 beschreibt ein Verfahren und eine Vorrichtung zur Montage von Radachsen-Modulen.

Aus der JP 61115784 A ist ein Verfahren zur Montage von Achsen und eines Antriebsmotors an einem Fahrgestellrahmen bekannt.

Aufgabe der Erfindung ist es daher, ein Verfahren und eine Vorrichtung zur Montage eines Fahrzeugs, insbesondere eines Nutzfahrzeugs, bereitzustellen, mittels denen die Montage der Radachsen vereinfacht und die Montagezeit bzw. Durchlaufzeit zur Montage der Radachsen verringert wird.

Diese Aufgabe wird durch die Merkmale der unabhängigen Ansprüche gelöst. Bevorzugte Weiterbildungen sind in den Unteransprüchen offenbart.

Gemäß Patentanspruch 1 wird ein Verfahren zur Montage eines Fahrzeugs, insbesondere eines Nutzfahrzeugs, beansprucht, wobei zunächst in einem Einrichtungsschritt mittels einer ersten Transporteinrichtung ein Fahrgestellrahmen des Nutzfahrzeugs hin zu einer Montagestation verlagert und dort ortsfest in einer definierten Rahmen-Montageposition angeordnet wird, wobei in dem Einrichtungsschritt zudem auch mittels einer zweiten Transporteinrichtung wenigstens ein mehrere, insbesondere alle, Radachsen des Nutzfahrzeugs aufweisendes Fahrwerkmodul ebenfalls hin zu der Montagestation verlagert und dort in einer definierten Grundposition angeordnet wird, wobei in dem Einrichtungsschritt weiter jede Radachse des in der Grundposition angeordneten Fahrwerkmoduls an einer der jeweiligen Radachse zugeordneten Positionierungseinrichtung der Montagestation festgelegt wird. Anschließend wird jede festgelegte Radachse des Fahrwerkmoduls mittels der jeweiligen Positionierungseinrichtung in einem Positionierungsschritt relativ zu dem in der Rahmen-Montageposition angeordneten Fahrgestellrahmen in eine definierte Radachsen-Montageposition gebracht, wobei in der Radachsen-Montageposition der jeweiligen Radachse wenigstens ein Teil von Verbindungspunkten der Radachse korrespondierenden Verbindungspunkten des Fahrgestellrahmens zugeordnet sind. Schließlich werden die in die Radachsen-Montagepositionen gebrachten Radachsen und der Fahrgestellrahmen dann an den einander zugeordneten Verbindungspunkten miteinander verbunden.

Auf diese Weise wird die Montage der mehreren Radachsen deutlich vereinfacht, da nun mehrere Radachsen gleichzeitig mittels der Positionierungseinrichtungen in ihre jeweiligen Radachsen-Montagepositionen gebracht und an den Fahrgestellrahmen montiert werden können. Somit können nun mehrere Radachsen gleichzeitig bzw. parallel montiert werden. Dadurch wird auch die Montagezeit bzw. die Durchlaufzeit zur Montage der Radachsen deutlich verringert. Durch die Verlagerung der jeweiligen Radachse mittels der zugeordneten Positionierungseinrichtung kann zudem auf einfache Weise eine komfortable und ergonomisch optimale Montageposition für einen Monteur bzw. für einen Werker realisiert werden.

Die Begrifflichkeit "Fahrwerkmodul" ist hier dabei ausdrücklich in einem weiten Sinne zu verstehen. So müssen die einzelnen Komponenten des Fahrwerkmoduls, beispielsweise die Radachsen, nicht zwingend miteinander verbunden sein. Beispielsweise kann das Fahrwerkmodul auch derart ausgebildet sein, dass keine Komponente des Fahrwerkmoduls mit einer anderen Komponente des Fahrwerkmoduls verbunden ist. Ebenso kann beispielsweise nur ein Teil der einzelnen Komponenten des Fahrwerkmoduls oder alle Komponenten des Fahrwerkmoduls miteinander verbunden sein. Neben den mehreren Radachsen kann das Fahrwerkmodul beispielsweise auch eine Antriebswelle, ein Verteilergetriebe für einen Allradantrieb oder wenigstens ein, insbesondere mehrere, Fahrwerk-Anbauteil aufweisen.

In einer bevorzugten Verfahrensführung wird der Positionierungsschritt derart oft durchgeführt, bis die jeweilige Radachse vollständig an den Fahrgestellrahmen montiert ist, wobei die jeweilige Radachse bei jeden Positionierungsschritt in eine andere Radachsen-Montageposition verlagert wird. Dadurch können die Radachsen einfach und rasch vollständig an den Fahrgestellrahmen montiert werden.

Erfindungsgemäß weist jede Positionierungseinrichtung zwei in Montagestation-Querrichtung einander gegenüberliegend angeordnete Positionierungseinheiten auf, wobei jede Positionierungseinheit eine Radnaben-Fixiereinrichtung aufweist, an der eine Radnabe einer Radachse festgelegt werden kann, und wobei jede Positionierungseinheit eine Bewegungseinrichtung aufweist, mittels der die jeweilige Radnaben-Fixiereinrichtung relativ zu dem in seiner Rahmen-Montageposition angeordneten Fahrgestellrahmen bewegt werden kann. Mittels einer derart ausgebildeten Positionierungseinrichtung kann erfindungsgemäß die Verfahrensführung einfach und zuverlässig realisiert werden. Bevorzugt ist dabei vorgesehen, dass die Radnaben-Fixiereinrichtungen mittels der zugeordneten Bewegungseinrichtungen relativ zu dem Fahrgestellrahmen verlagert und/oder verdreht werden können, um die Radachsen wie gewünscht anordnen zu können.

Vorzugsweise ist eine Steuereinrichtung vorgesehen, mittels der die Positionierungseinrichtungen, insbesondere die Bewegung der Radnaben-Fixiereinrichtungen, geregelt und/oder gesteuert werden. Dadurch können die Radnaben-Fixiereinrichtung auf besonders komfortable Weise bewegt werden. Bevorzugt ist dabei vorgesehen, dass jede Radnaben-Fixiereinrichtung der Positionierungseinrichtungen mittels der Steuereinrichtung, zeitlich gesehen, vor der Verlagerung des Fahrwerkmoduls in die Montagestation selbsttätig bzw. automatisch in eine definierte Ausgangsstellung gebracht wird. Dadurch wird die Montagezeit weiter verringert und der Komfort für den Werker erhöht. Die Information, dass demnächst ein Fahrwerkmodul in die Montagestation verlagert wird, kann der Steuereinrichtung beispielsweise mittels einer durch eine Person bzw. durch einen Werker betätigbaren, signaltechnisch mit der Steuereinrichtung verbundenen Betätigungseinrichtung mitgeteilt werden. Diese Betätigungseinrichtung kann dabei beispielsweise durch einen Taster- und/oder durch einen Schalter gebildet sein.

Vorzugsweise kann der Werker der Steuereinrichtung mittels der Betätigungseinrichtung zudem mitteilen, welche Art von Fahrwerkmodul als nächstes in die Montagestation verlagert wird. Je nach Art des Fahrwerkmoduls kann die Steuereinrichtung die Radnaben-Fixiereinrichtungen dann in unterschiedliche Ausgangsstellungen bringen. Alternativ zu der durch den Werker betätigbaren Betätigungseinrichtung kann die Steuereinrichtung aber auch eine Fahrwerkmodul-Erfassungseinrichtung aufweisen, mittels der die Steuereinrichtung eine Verlagerung eines Fahrwerkmoduls in die Montagestation selbsttätig bzw. automatisch erfassen kann. Die Fahrwerkmodul-Erfassungseinrichtung kann dabei beispielsweise durch wenigstens eine Bild-Erfassungseinrichtung, insbesondere durch wenigstens eine Kamera, gebildet sein. Bevorzugt ist es dabei zudem, wenn mittels der Fahrwerkmodul-Erfassungseinrichtung auch die Art des in die Montagestation verlagerten Fahrgestellmoduls erfasst werden kann. Alternativ kann der Steuereinrichtung die Information über die Art des nächsten in die Montagestation verlagerten Fahrgestellmoduls beispielsweise aber auch mittels eines Produktionsservers mitgeteilt werden.

In einer bevorzugten konkreten Ausgestaltung wird an einer ersten Radnaben-Fixiereinrichtung der jeweiligen Positionierungseinrichtung eine erste Radnabe der zugeordneten Radachse festgelegt, wobei an einer zweiten Radnaben-Fixiereinrichtung der jeweiligen Positionierungseinrichtung eine zweite Radnabe der zugeordneten Radachse festgelegt wird. Vorzugsweise kann die Steuereinrichtung dann in einem Master-Slave-Modus geschaltet werden, in dem die Bewegung der ersten und zweiten Radnaben-Fixiereinrichtung wenigstens einer Positionierungseinrichtung mittels einer Master-Slave-Steuerung gesteuert wird, wobei eine durch die erste Radnaben-Fixiereinrichtung der jeweiligen Positionierungseinrichtung gebildete Slave-Fixiereinrichtung nach einer definierten Steuervorgabe der Bewegung einer durch die zweite Radnaben-Fixiereinrichtung der jeweiligen Positionierungseinrichtung gebildeten Master-Fixiereinrichtung folgt. Mittels einer derartigen Master-Slave-Steuerung wird die Steuerung der Positionierungseinrichtungen deutlich vereinfacht, da die Slave-Fixiereinrichtung nun der Master-Fixiereinrichtung folgt und somit nicht mehr separat gesteuert werden muss. Bevorzugt ist dabei vorgesehen, dass sich die Slave-Fixiereinrichtung parallel zu der Master-Fixiereinrichtung bewegt, um die Steuerung der Slave-Fixiereinrichtung weiter zu vereinfachen.

Vorzugsweise kann die Slave-Fixiereinrichtung in einem eingeschränkten Bereich unabhängig von der Master-Fixiereinrichtung bewegt werden. Dadurch können beispielsweise Fertigungstoleranzen an dem Fahrwerkmodul oder dem Fahrgestellrahmen mittels der Slave-Fixiereinrichtung ausgeglichen werden. Bevorzugt ist dabei vorgesehen, dass die Slave-Fixierungseinrichtung in Montagestation-Längsrichtung und/oder in Montage-Hochrichtung in einem eingeschränkten Bereich unabhängig von der Master-Fixiereinrichtung bewegt werden kann. Der eingeschränkte Bereich kann dabei beispielsweise durch eine Verlagerung der Slave-Fixiereinrichtung in Montagestation-Längsrichtung und/oder in Montagestation-Hochrichtung um ± 50 mm von der durch die Master-Fixiereinrichtung vorgegebenen Soll-Position für die Slave-Fixiereinrichtung gebildet sein. Bevorzugt ist zudem eine durch eine Person bzw. durch einen Werker betätigbare Betätigungseinrichtung, insbesondere ein Taster und/oder ein Schalter, vorgesehen, durch deren Betätigung der Master-Slave-Modus aktiviert und deaktiviert werden kann. Alternativ kann natürlich aber auch vorgesehen sein, dass die Steuereinrichtung den Master-Slave-Modus selbsttätig bzw. automatisch aktiviert und deaktiviert. Weiter alternativ könnte der Master-Slave-Modus aber auch permanent bzw. durchgehend aktiviert sein.

In einer weiteren bevorzugten Ausgestaltung kann die Steuereinrichtung in einem Master-Slave-Modus geschaltet werden, in dem zwei, in Montagestation-Längsrichtung gesehen, unmittelbar hintereinander angeordnete Positionierungseinrichtungen mittels einer Master-Slave-Steuerung gesteuert werden, wobei sich die Radnaben-Fixiereinrichtung der Slave-Positionierungseinrichtung stets in Montagestation-Hochrichtung entgegengesetzt zu der Bewegung der Radnaben-Fixiereinrichtungen der Master-Positionierungseinrichtung bewegen. Auf diese Weise kann eine zwei Radachsen aufweisende Baueinheit um eine durch die Montagestation-Querrichtung gebildete Querachse gedreht bzw. geschwenkt werden, so dass eine Pendelfunktion realisiert wird. Die Baueinheit kann dabei beispielsweise durch ein blattgefedertes Doppelhinterachs-Aggregat gebildet sein. Vorzugsweise ist dabei eine durch eine Person bzw. durch einen Werker betätigbare Betätigungseinrichtung, insbesondere ein Taster und/oder ein Schalter, vorgesehen, durch deren Betätigung die Master-Slave-Steuerung der unmittelbar hintereinander angeordneten Positionierungseinrichtungen aktiviert und deaktiviert werden kann. Weiter bevorzugt wird in dem Master-Slave-Modus durch Steuerung der Master-Positionierungseinrichtung die gegensätzliche Bewegung der Slave-Positionierungseinrichtung automatisch und/oder zeitgleich zu der Bewegung der Master-Positionierungseinrichtung ausgeführt.

Weiter bevorzugt kann die Steuereinrichtung in einen Schwimmmodus geschaltet werden, in dem wenigstens eine Radnaben-Fixiereinrichtung derart von wenigstens einem Antriebsmotor der zugeordneten Bewegungseinrichtung entkoppelt ist, dass sie in einem definierten Schwimmbereich manuell in Antriebsrichtung des Antriebsmotors bewegt werden kann. Mittels eines derartigen Schwimmmodus können die Radnaben-Fixiereinrichtungen einfach und zuverlässig in die gewünschte Position gebracht werden. Die Begrifflichkeit "manuell" ist hier dabei derart zu verstehen, dass die wenigstens eine Radnaben-Fixiereinrichtung durch Personenkraft bewegt wird. Somit ist die manuelle Bewegung der Radnaben-Fixiereinrichtung hier nicht auf eine Bewegung der Radnaben-Fixiereinrichtung mit der Hand beschränkt. Bevorzugt ist weiter vorgesehen, dass die Antriebsrichtung des entkoppelten Antriebsmotors durch die Montagestation-Längsrichtung und/oder durch die Montagestation-Hochrichtung gebildet ist.

Vorzugsweise ist der definierte Schwimmbereich durch eine Verlagerung der Radnaben-Fixiereinrichtung in Montagestation-Längsrichtung und/oder in Montagestation-Hochrichtung um ± 15 mm von einer Entkopplungsstellung der Radnaben-Fixiereinrichtung gebildet, in der die Radnaben-Fixiereinrichtung von der wenigstens einen Antriebseinrichtung entkoppelt wurde. Weiter bevorzugt ist eine durch eine Person bzw. durch einen Werker betätigbare Betätigungseinrichtung, insbesondere ein Taster und/oder ein Schalter, vorgesehen, durch deren Betätigung der Schwimmmodus aktiviert und deaktiviert werden kann.

In einer weiteren bevorzugten Ausgestaltung ist jeder Positionierungseinheit eine durch eine Person bzw. durch einen Werker betätigbare Bedieneinrichtung, ein Joystick und/oder ein Touchscreen, zugeordnet, mittels der die jeweilige Positionierungseinheit, insbesondere die Bewegung der Radnaben-Fixiereinrichtung der jeweiligen Positionierungseinheit, gesteuert und/oder bedient werden kann. Mittels derartiger Bedieneinrichtungen können die Positionierungseinheiten wie gewünscht von einem Werker gesteuert werden. Die Bedieneinrichtung kann dabei beispielsweise, insbesondere lösbar, an der jeweiligen Positionierungseinheit festgelegt sein. Bevorzugt ist die Bedieneinrichtung zudem mobil ausgebildet, so dass sie von einem Werker mitgetragen bzw. mitgeführt werden kann und im mitgeführten Zustand zur Steuerung der jeweiligen Positioniereinheit verwendet werden kann. Sofern die Bewegung der jeweiligen Radnaben-Fixiereinrichtung mittels eines Joysticks gesteuert werden kann, erfolgt die Steuerung vorzugsweise dergestalt, dass die Geschwindigkeit der Bewegung der Radnaben-Fixiereinrichtung in wenigstens eine definierte Richtung exponentiell mit dem Neigungswinkel des Joysticks ansteigt.

In einer bevorzugten konkreten Ausgestaltung kann jede Radnabe mittels der zugeordneten Positionierungseinheit in Montagestation-Längsrichtung und/oder in Montagestation-Querrichtung und/oder in Montagestation-Hochrichtung verlagert werden. Weiter bevorzugt kann jede Radachse mittels der zugeordneten Positionierungseinrichtung um eine Längsachse der Radachse verdreht werden.

Besonders bevorzugt sind die Positionierungseinrichtungen bzw. die Geostationen bodenseitig in der Montagestation angeordnet, wobei der in der Rahmen-Montageposition angeordnete Fahrgestellrahmen von dem Montagestation-Boden beabstandet angeordnet ist, und wobei in der Rahmen-Montageposition eine in Fahrlage des fertig montierten Fahrgestellrahmens gesehen, untere Seite des Fahrgestellrahmens dem Montagestation-Boden zugewandt ist. Auf diese Weise wird die Montage des Nutzfahrzeugs weiter vereinfacht, da der Fahrgestellrahmen nun nicht mehr rücklings angeordnet werden muss, um die Fahrwerkkomponenten zu montieren. Bevorzugt ist dabei vorgesehen, dass der in der Rahmen-Montageposition angeordnete Fahrgestellrahmen mittels eines Krans und/oder mittels einer elektrischen Hängebahn gehaltert ist. Alternativ kann der in der Rahmen-Montageposition angeordnete Fahrgestellrahmen aber auch an wenigstens einem bodenseitig angeordneten Stützelement, insbesondere an wenigstens einem bodenseitig angeordneten Stützbock, aufliegen.

In einer bevorzugten konkreten Verfahrensführung wird das Fahrwerkmodul mit wenigstens einem Transportwagen in die Montagestation gefahren. Dadurch kann das Fahrwerkmodul einfach und zuverlässig in die Montagestation verlagert werden. Weiter bevorzugt liegt das in der Grundposition angeordnete Fahrwerkmodul auf wenigstens einem Transportwagen auf.

In einer bevorzugten Ausgestaltung weist das Fahrwerkmodul zwei vordere und zwei hintere Radachsen, mehrere Gelenkwellen zur Verbindung der Radachsen sowie eine Antriebswelle zum Antreiben des Verteilergetriebes auf. Alternativ kann das Fahrwerkmodul beispielsweise auch nur eine vordere und eine hintere Radachse und eine Antriebswelle aufweisen. In einer weiteren alternativen Konfiguration kann das Fahrwerkmodul beispielsweise eine vordere und zwei hintere Radachsen, eine Gelenkwelle zur Verbindung der hinteren Radachsen und eine Antriebswelle aufweisen. Zudem kann bei jeder der genannten Konfiguration optional auch ein Verteilergetriebe für einen Allradantrieb vorgesehen sein.

Vorzugsweise weist die Montagestation vier in Montagestation-Längsrichtung hintereinander angeordnete Positionierungseinrichtung auf, um Fahrwerkmodule mit bis zu vier Radachsen an einen Fahrgestellrahmen montieren zu können. Um Fahrwerkmodule mit mehr als vier, beispielsweise mit fünf, Radachsen montieren zu können, kann natürlich aber auch vorgesehen sein, dass die Montagestation mehr als vier bzw. entsprechend der maximalen Anzahl der zu montierenden Radachsen eines Fahrwerkmoduls in Montagestation-Längsrichtung hintereinander angeordnete Positionierungseinrichtungen aufweist. Weiter bevorzugt sind die Positionierungseinrichtungen, insbesondere über wenigstens eine Plattform, an einem Montagestation-Boden festgelegt, um einen einfachen und robusten Aufbau zu realisieren.

Zur Lösung der bereits genannten Aufgabe wird ferner eine Vorrichtung zur Montage eines Fahrzeugs, insbesondere eines Nutzfahrzeugs, beansprucht, mit einer ersten Transporteinrichtung, mittels der ein Fahrgestellrahmen des Fahrzeugs hin zu einer Montagestation verlagert und dort ortsfest in einer definierten Rahmen-Montageposition angeordnet werden kann, und mit einer zweiten Transporteinrichtung, mittels der wenigstens ein mehrere, insbesondere alle, Radachsen des Fahrzeugs aufweisendes Fahrwerkmodul ebenfalls hin zu der Montagestation verlagert und dort in einer definierten Grundposition angeordnet werden kann. Jede Radachse des in der Grundposition angeordneten Fahrwerkmoduls kann dabei an einer der jeweiligen Radachse zugeordneten Positionierungseinrichtung der Montagestation festgelegt werden. Zudem kann jede festgelegte Radachse des Fahrwerkmoduls mittels der jeweiligen Positionierungseinrichtung relativ zu dem in der Rahmen-Montageposition angeordneten Fahrgestellrahmen in wenigstens eine definierte Radachsen-Montageposition gebracht werden, wobei in der Radachse-Montageposition der jeweiligen Radachse wenigstens ein Teil von Verbindungspunkten der Radachse korrespondierenden Verbindungspunkten des Fahrgestellrahmens zugeordnet sind, und wobei die in die Radachsen-Montagepositionen gebrachten Radachsen und der Fahrgestellrahmen an den einander zugeordneten Verbindungspunkten miteinander verbunden werden können.

Die sich durch die erfindungsgemäße Vorrichtung ergebenden Vorteile sind identisch mit den bereits gewürdigten Vorteilen der erfindungsgemäßen Verfahrensführung, so diese an dieser Stelle nicht wiederholt werden.

Des Weiteren wird auch eine Positioniereinheit beansprucht, mit einer Radnaben-Fixiereinrichtung, an der eine Radnabe einer Fahrzeug-Radachse, insbesondere einer Nutzfahrzeug-Radachse, festgelegt werden kann, und mit einer Bewegungseinrichtung, mittels der die Radnaben-Fixiereinrichtung und somit auch eine an der Radnaben-Fixiereinrichtung festgelegte Radnabe relativ zu der Boden-Fixiereinrichtung bewegt werden kann, insbesondere relativ zu der Boden-Fixiereinrichtung verlagert und/oder verdreht werden kann.

Die sich durch die erfindungsgemäße Positionierungseinheit ergebenden Vorteile sind ebenfalls identisch mit den bereits gewürdigten der erfindungsgemäßen Verfahrensführung, so dass diese hier ebenfalls nicht wiederholt werden.

In einer bevorzugten Ausgestaltung der Positionierungseinheit kann die Radnaben-Fixiereinrichtung mittels der Bewegungseinrichtung relativ zu der Boden-Fixiereinrichtung in Positionierungseinheit-Längsrichtung und/oder in Positionierungseinheit-Querrichtung und/oder in Positionierungseinheit-Hochrichtung verlagert werden. Weiter bevorzugt kann die Radnaben-Fixiereinrichtung mittels der Bewegungseinrichtung relativ zu der Boden-Fixiereinrichtung um eine durch die Positionierungseinheit-Querrichtung gebildete Querachse verdreht werden. Durch diese Verlagerung und/oder Verdrehung der Radnaben-Fixiereinrichtung kann die Radnabe stets wie gewünscht positioniert werden.

Vorzugsweise weist die Bewegungseinrichtung ein X-Schlittenelement auf, das relativ zu der Boden-Fixiereinrichtung in Positionierungseinheit-Längsrichtung verlagerbar an der Boden-Fixiereinrichtung festgelegt ist. Dadurch kann die Verlagerung der Radnaben-Fixiereinrichtung in Positionierungseinheit-Längsrichtung einfach und effektiv realisiert werden. Bevorzugt ist dabei vorgesehen, dass die Boden-Fixiereinrichtung mehrere, insbesondere zwei, in Positionierungseinheit-Querrichtung voneinander beabstandete Führungsschienen aufweist, in denen das X-Schlittenelement in Positionierungseinheit-Längsrichtung relativ zu der Boden-Fixiereinrichtung verlagerbar geführt ist. Dadurch kann das X-Schlittenelement einfach und zuverlässig in Positionierungseinheit-Längsrichtung verlagerbar an der Boden-Fixiereinrichtung festgelegt werden.

Weiter bevorzugt weist die Bewegungseinrichtung eine X-Antriebseinrichtung auf, mittels der das X-Schlittenelement in Positionierungseinheit-Längsrichtung relativ zu der Boden-Fixiereinrichtung verlagert werden kann, um die Verlagerung des X-Schlittenelements zu vereinfachen. Bevorzugt ist dabei vorgesehen, dass die Antriebseinrichtung durch einen Kettentrieb und/oder durch einen Spindeltrieb gebildet ist. Alternativ und/oder zusätzlich wäre es aber natürlich auch denkbar, dass das X-Schlittenelement nur manuell bzw. nur mit Personenkraft relativ zu der Boden-Fixiereinrichtung verlagert werden kann.

Weiter bevorzugt weist das X-Schlittenelement eine durch eine Person betätigbare Bremseinrichtung auf, mittels der das X-Schlittenelement gebremst werden kann. So kann das X-Schlittenelement, insbesondere bei einer manuellen Verlagerung des X-Schlittenelements, besonders effektiv abgebremst werden. Bevorzugt ist dabei vorgesehen, dass die Bremseinrichtung eine Druckplatte aufweist, durch deren Druckbeaufschlagung das X-Schlittenelement gebremst werden kann. Die Druckplatte ist dabei vorzugsweise derart angeordnet, dass sie durch einen Fuß einer Person bzw. eines Werkers betätigt werden kann.

Vorzugsweise weist das X-Schlittenelement eine Trittfläche für wenigstens eine die Positioniereinheit bedienende bzw. betätigende Person auf. Dadurch kann sich die die Positioniereinheit bedienende Person auf das X-Schlittenelement stellen und sich zusammen mit dem X-Schlittenelement in Positionierungseinheit-Längsrichtung fortbewegen.

In einer weiteren bevorzugten Ausgestaltung weist die Bewegungseinrichtung ein Y-Schlittenelement auf, das relativ zu dem X-Schlittenelement in Positionierungseinheit-Querrichtung verlagerbar an dem X-Schlittenelement festgelegt ist. Dadurch kann die Bewegung der Radnaben-Fixiereinrichtung in Positionierungseinheit-Querrichtung auf einfache Weise realisiert werden. Bevorzugt ist dabei vorgesehen, dass das X-Schlittenelement mehrere, insbesondere zwei, in Positionierungseinheit-Längsrichtung voneinander beabstandete Führungsschienen aufweist, in denen das Y-Schlittenelement in Positionierungseinheit-Längsrichtung relativ zu dem X-Schlittenelement verlagerbar geführt ist. Auf diese Weise kann die Verlagerung des Y-Schlittenelements relativ zu dem X-Schlittenelement auf einfache und zuverlässige Weise realisiert werden.

Vorzugsweise weist die Bewegungseinrichtung eine Y-Antriebseinrichtung auf, mittels der das Y-Schlittenelement relativ zu dem X-Schlittenelement in Positionierungseinheit-Querrichtung verlagert werden kann. Mittels einer derartigen Y-Antriebseinrichtung wird die Verlagerung des Y-Schlittenelements deutlich vereinfacht. Bevorzugt ist dabei vorgesehen, dass die Antriebseinrichtung durch einen Kettentrieb und/oder durch einen Spindeltrieb gebildet ist. Alternativ und/oder zusätzlich wäre es aber natürlich auch denkbar, dass das Y-Schlittenelement manuell bzw. mit Personenkraft relativ zu dem X-Schlittenelement verlagert werden kann.

Weiter bevorzugt weist das Y-Schlittenelement ein durch eine Person greifbares Griffelement auf, mittels dem das Y-Schlittenelement relativ zu dem X-Schlittenelement in Positionierungseinheit-Querrichtung manuell bzw. durch Personenkraft verlagert werden kann und/oder mittels dem sich eine auf einer Trittfläche des X-Schlittenelements befindliche Person abstützen kann. Bevorzugt ist dabei vorgesehen, dass das Griffelement U-förmig ausgebildet ist, um das Griffelement einfach und funktionsoptimiert zu gestalten.

Vorzugsweise weist das Y-Schlittenelement eine durch eine Person betätigbare Bedieneinrichtung, insbesondere einen Joystick und/oder einen Touchscreen, auf, mittels der die Positionierungseinheit bedient und/oder gesteuert werden kann.

In einer weiteren bevorzugten Ausgestaltung weist die Bewegungseinrichtung ein Z-Schlittenelement auf, das relativ zu dem Y-Schlittenelement in Positionierungseinheit-Hochrichtung verlagerbar an dem Y-Schlittenelement festgelegt ist. Mittels eines derartigen Z-Schlittenelements kann die Bewegung der Radnaben-Fixiereinrichtung in Positionierungseinheit-Hochrichtung auf einfache Weise realisiert werden. Bevorzugt ist dabei vorgesehen, dass das Y-Schlittenelement mehrere, insbesondere zwei, in Positionierungseinheit-Längsrichtung voneinander beabstandete Führungsschienen aufweist, in denen das Z-Schlittenelement in Positionierungseinheit-Hochrichtung relativ zu Y-Schlittenelement verlagerbar geführt ist. So kann die Verlagerung des Z-Schlittenelements relativ zu dem Y-Schlittenelement auf einfache und zuverlässige Weise realisiert werden.

Weiter bevorzugt weist die Bewegungseinrichtung eine Z-Antriebseinrichtung auf, mittels der das Z-Schlittenelement relativ zu dem Y-Schlittenelement in Positionierungseinheit-Hochrichtung verlagert werden kann. Dadurch kann das Z-Schlittenelement auf besonders einfache Weise verlagert werden. Bevorzugt ist dabei vorgesehen, dass die Antriebseinrichtung durch einen Kettentrieb und/oder durch einen Spindeltrieb gebildet ist.

Vorzugsweise ist die Radnaben-Fixiereinrichtung relativ zu dem Z-Schlittenelement um die durch die Positionierungseinheit gebildete Querachse verdrehbar an dem Z-Schlittenelement festgelegt. So kann die Verlagerung der Radnaben-Fixiereinrichtung relativ zu dem Z-Schlittenelement auf einfache Weise verwirklicht werden. Bevorzugt ist dabei vorgesehen, dass das Z-Schlittenelement ein relativ zu einem Grundkörper des Z-Schlittenelements um die Querachse verdrehbares Drehelement, insbesondere eine Drehscheibe, aufweist, an der die Radnaben-Fixiereinrichtung festgelegt ist. So kann die Verdrehung der Radnaben-Fixiereinrichtung relativ zu dem Z-Schlittenelement einfach und effektiv realisiert werden.

Weiter bevorzugt ist die Radnaben-Fixiereinrichtung mittels einer Flanschverbindung an dem Drehelement festgelegt, um einen besonders robusten Aufbau bereitzustellen. Bevorzugt ist das Drehelement zudem mittels eines Wälzlagers relativ zu dem Grundkörper um die Querachse verdrehbar an dem Grundkörper gelagert.

In einer weiteren bevorzugten Ausgestaltung weist die Bewegungseinrichtung eine Drehantriebseinrichtung auf, mittels der die Radnaben-Fixiereinrichtung relativ zu dem Z-Schlittenelement um die Querachse verdreht werden kann. Dadurch wird die Verdrehung der Radnaben-Fixiereinrichtung relativ zu dem Z-Schlittenelement deutlich vereinfacht. Bevorzugt ist dabei vorgesehen, dass die Drehantriebseinrichtung wenigstens ein, insbesondere zwei, Hebelelement aufweist, mittels dem ein dem Z-Schlittenelement zugeordneter Antriebsmotor, insbesondere ein Elektromotor, drehmomentübertragend mit der Radnaben-Fixiereinrichtung verbunden ist.

Weiter bevorzugt ist ein Adapterelement vorgesehen, mittels dem die Radnabe an der Positionierungseinheit festgelegt werden kann, wobei bevorzugt vorgesehen ist, dass das Adapterelement über durch einen Lochkreis der Radnabe gebildete Gewindebohrungen mit der Radnabe verschraubt ist.

Vorzugsweise weist die Radnaben-Fixiereinrichtung eine Aufnahme mit einem Aufnahmeraum auf, in dem das scheibenförmige Adapterelement mit einem Scheibenrandbereich angeordnet und/oder eingesetzt werden kann. Mittels einer derartigen Aufnahme kann die Radnabe der Radachse besonders einfach an der Radnaben-Fixiereinrichtung festgelegt werden.

Weiter bevorzugt ist eine Spanneinrichtung vorgesehen, mittels der das in den Aufnahmeraum eingesetzte scheibenförmige Adapterelement eingespannt werden kann. Dadurch kann die Radachse einfach und zuverlässig an der Radnaben-Fixiereinrichtung festgelegt werden. Bevorzugt ist dabei vorgesehen, dass die Spanneinrichtung einen Kniehebelmechanismus und/oder eine, insbesondere pneumatische und/oder hydraulische, Betätigungseinrichtung aufweist.

Vorzugsweise weist das Adapterelement auch eine Fixiereinrichtung auf, mittels der das Adapterelement und somit auch eine mit dem Adapterelement verbundene Radachse an einem Transportwagen zum Transport der Radachse in die Montagestation festgelegt werden kann.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Ansicht von oben eine Montagestation einer erfindungsgemäßen Vorrichtung;
- Fig. 2: in einer Darstellung gemäß Fig. 1 die Montagestation mit einem in die Montagestation verlagerten Fahrwerkmodul;
- Fig. 3: in einer Darstellung gemäß Fig1 die Montagestation mit einem in die Montagestation verlagerten Fahrwerkmodul;
- Fig. 4: in einer Darstellung gemäß Fig. 1 die Montagestation mit in die Montagestation verlagerten Fahrwerkmodul und Fahrgestellrahmen;
- Fig. 5: in einer Ansicht von hinten die Montagestation im in Fig. 4 gezeigten Zustand;
- Fig. 6: in einer Perspektivdarstellung einer Positioniereinheit der Montagestation;
- Fig. 7: eine Schnittdarstellung entlang der Schnittebene A-A aus Fig. 6;
- Fig. 8: in einer Perspektivdarstellung ein X-Schlittenelement der Positioniereinheit;
- Fig. 9: in einer Perspektivdarstellung eine Y-Schlitteneinheit der Positioniereinheit;
- Fig. 10: in einer Perspektivdarstellung ein Z-Schlittenelement der Positioniereinheit;
- Fig. 11: das Z-Schlittenelement in einer Seitenansicht;
- Fig. 12: das Z-Schlittenelement in einer Seitenansicht;
- Fig. 13: eine Schnittdarstellung entlang der Schnittebene B-B aus Fig. 12;
- Fig. 14: in einer Perspektivdarstellung eine Radnaben-Fixiereinrichtung der Positioniereinheit; und
- Fig. 15: die Radnaben-Fixiereinrichtung in einer Ansicht von oben.

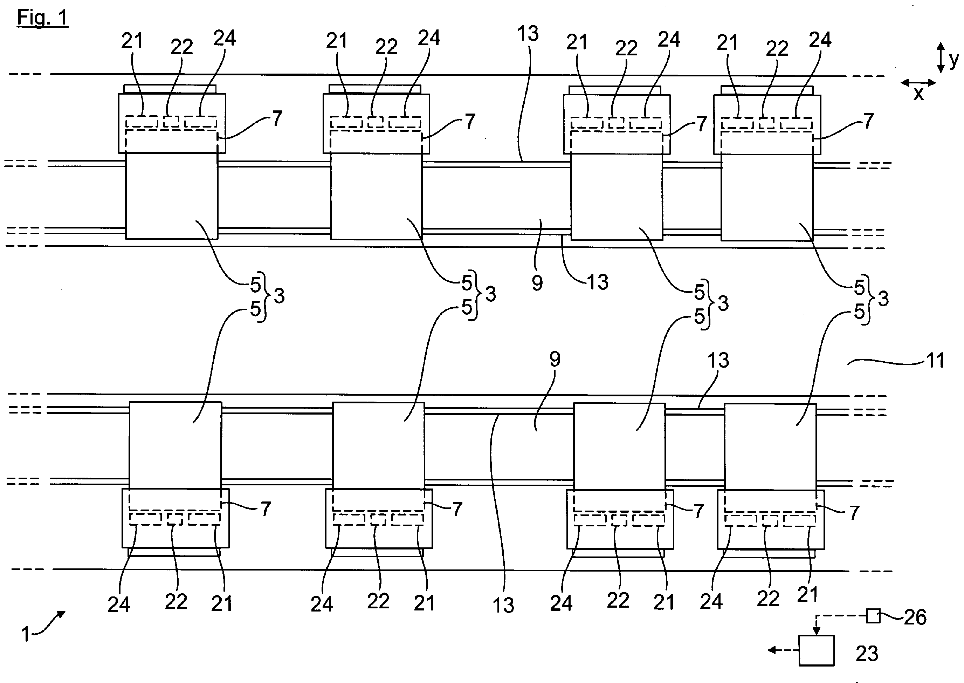

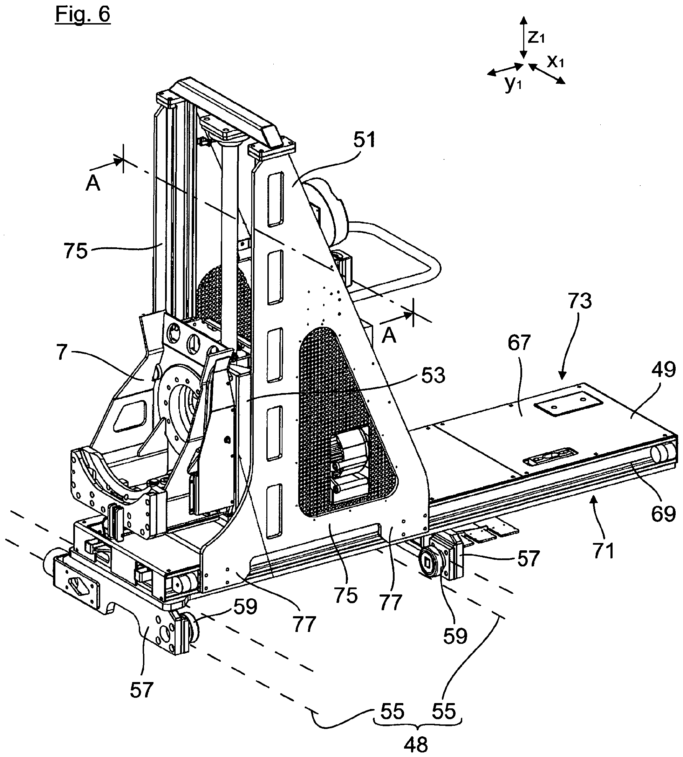

In Fig. 1 ist schematisch eine Montagestation 1 in Draufsicht bzw. in einer Ansicht von oben gezeigt. Die Montagestation 1 weist mehrere, hier beispielhaft vier, in Montagestation-Längsrichtung x hintereinander angeordnete Positionierungseinrichtungen 3 auf, von denen (erfindungsgemäß) jede zwei Positionierungseinheiten 5 aufweist. Die Positionierungseinheiten 5 der jeweiligen Positionierungseinrichtung 3 sind in Montagestation-Querrichtung y voneinander beabstandet und mit in Fig. 1 mit gestrichelten Linien angedeuteten Radnaben-Fixiereinrichtungen 7 (siehe auch Fig. 6) einander zugewandt angeordnet.

Weiter sind die Positionierungseinheiten 5 hier beispielhaft an zwei Plattformen 9 in Montagestation-Längsrichtung x verlagerbar festgelegt. Die Plattformen 9 verlaufen zueinander parallel in Montagestation-Längsrichtung x und sind in Montagestation-Querrichtung y mit einem definierten Abstand voneinander beabstandet. Jede Plattform 9 ist an einem Montagestation-Boden 11 starr bzw. unbeweglich festgelegt und weist mehrere, hier beispielhaft zwei, Führungsschienen 13 auf, mittels denen hier vier Positionierungseinheiten 5 relativ zu der jeweiligen Plattform 9 bzw. zu dem Montagestation-Boden 11 in Montagestation-Längsrichtung x verlagerbar geführt sind.

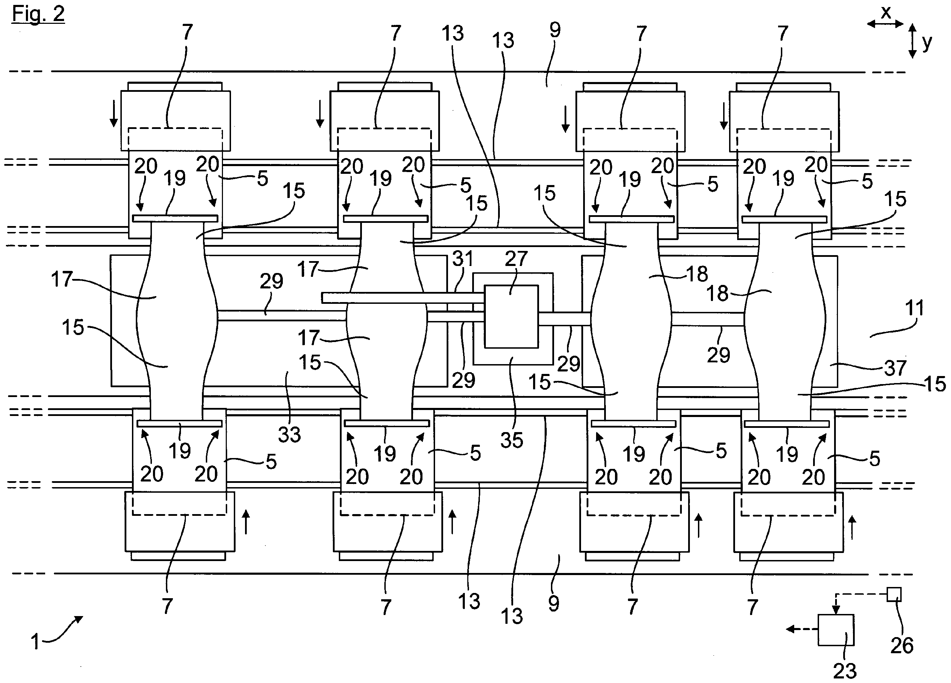

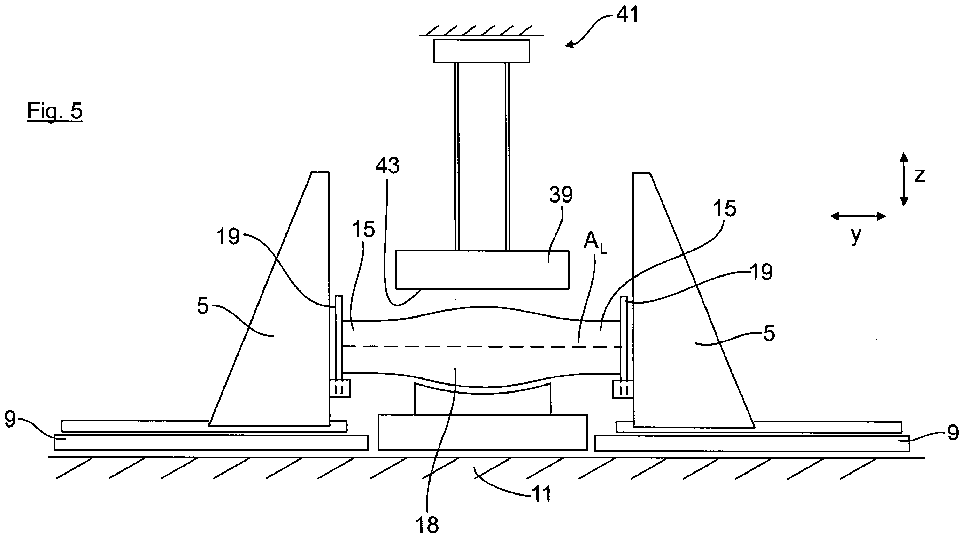

Mittels der genannten Radnaben-Fixiereinrichtungen 7 kann eine Radnabe 15 von in Fig. 2 gezeigten Nutzfahrzeug-Radachsen 17, 18 an der jeweiligen Positionierungseinheit 5 festgelegt werden. Die Festlegung der Radnabe 15 an der Positionierungseinheit 5 erfolgt hier beispielhaft mittels eines scheibenförmigen Adapterelements 19 (Fig. 2), das über Gewindebohrungen eines Lochkreises der Radnabe 15 mit der Radnabe 15 verschraubt werden kann und im verschraubten Zustand mit einem Randbereich 20 in Radachsen-Radialrichtung nach außen von der Radnabe 15 abragt. Über diesen Randbereich 20 kann das Adapterelement 19 dann an der jeweiligen Positionierungseinheit 5 festgelegt werden, wie dies in Fig. 5 schematisch angedeutet ist. Mittels der beiden Radnaben-Fixiereinrichtungen 7 der jeweiligen Positionierungseinrichtung 3 kann somit eine Radachse 17, 18 mit ihren beiden Radnaben 15 an der jeweiligen Positionierungseinrichtung 3 festgelegt werden.

Weiter ist hier jede Positionierungseinheit 5 derart ausgebildet, dass die jeweilige Radnaben-Fixiereinrichtung 7 und somit auch eine an der Radnaben-Fixiereinrichtung 7 festgelegte Radnabe 15 relativ zu dem Montagestation-Boden 11 bzw. relativ zu der jeweiligen Plattform 9 in Montagestation-Querrichtung y und in Montagestation-Hochrichtung z verlagert werden kann. Zudem ist hier jede Positionierungseinrichtung 3 auch derart ausgebildet, dass eine an der jeweiligen Positionierungseinrichtung 3 festgelegte Radachse 17, 18 um eine Längsachse A_{L} (Fig. 5) der Radachse 17, 18 verdreht werden kann. Die Verlagerung der Radnaben-Fixiereinrichtungen 7 in Montagestation-Längsrichtung x sowie in Montagestation-Querrichtung y erfolgt hier beispielhaft manuell bzw. durch Personenkraft. Die Verlagerung der Radnaben-Fixiereinrichtungen 7 in Montagestation-Hochrichtung z erfolgt hier beispielhaft mittels in Fig. 1 mit gestrichelten Linien angedeuteten Z-Antriebseinrichtungen 21 der Positionierungseinheiten 5. Die Verdrehung der Radachse 17, 18 um die Längsachse A_{L} erfolgt hier beispielhaft mittels in Fig. 1 mit gestrichelten Linien angedeuteter Drehantriebseinrichtungen 22 der Positionierungseinheiten 5. Die Antriebseinrichtungen 21, 22 können mittels eines Steuergeräts 23 sowie auch mittels in Fig. 1 mit gestrichelten Linien angedeuteter Betätigungseinrichtungen 24, hier beispielhaft Touchscreens, der Positionierungseinheiten 5 gesteuert werden.

Im Folgenden wird nun zunächst die erfindungsgemäße Verfahrensführung näher erläutert. Der Aufbau der Positionierungseinheiten 5 wird später noch detaillierter erläutert.

In Fig. 1 befindet sich die Montagestation 1 in einem Ausgangszustand. In diesem Ausgangszustand befinden sich noch keine zu montierenden Bauteile in der Montagestation 1. Zudem befinden sich die Radnaben-Fixiereinrichtungen 7 hier in einer Ausgangsstellung. In dieser Ausgangsstellung sind die Radnaben-Fixiereinrichtungen 7 hier beispielhaft in Montagestation-Querrichtung y möglichst weit außen sowie in Montagestation-Hochrichtung z möglichst weit unten angeordnet. Die Verlagerung der Radnaben-Fixiereinrichtungen 7 in Montagestation-Hochrichtung z nach unten erfolgt hier dabei selbsttätig bzw. automatisch, wenn eine signaltechnisch mit dem Steuergerät 23 verbundene, durch eine Person betätigbare Betätigungseinrichtung 26, insbesondere ein Taster und/oder Schalter, betätigt wird.

Befindet sich die Montagestation 1 in dem Ausgangszustand und soll mittels der Montagestation 1 ein Nutzfahrzeug montiert werden, wird hier beispielhaft ein Fahrwerkmodul 25 (Fig. 2) in die Montagestation 1 verlagert und in einer in den Fig. 2 bis 5 gezeigten Grundposition angeordnet. Das Fahrwerkmodul 25 weist hier zwei vordere Radachsen 17, zwei hintere Radachsen 18, ein Verteilergetriebe 27 für einen Allradantrieb, vier Gelenkwellen 29 zur Verbindung der Radachsen 17, 18 und des Verteilergetriebes 27 sowie eine Antriebswelle 31 zum Antreiben des Verteilergetriebes 27 auf. Diese Konfiguration des Fahrwerkmoduls 25 soll lediglich als Beispiel für ein Fahrwerkmodul dienen. Natürlich könnte das Fahrwerkmodul 25 auch anders konfiguriert bzw. ausgebildet sein.

Weiter wird das Fahrwerkmodul 25 hier beispielhaft mittels mehrerer Transportwagen 33, 35, 37 in die Montagestation 1 gefahren. Mittels des Transportwagens 33 werden hier beispielhaft die vorderen Radachsen 17 in die Montagestation 1 gefahren. Mittels des Transportwagens 35 wird hier beispielhaft das Verteilergetriebe 27 in die Montagestation 1 gefahren. Mittels des Transportwagens 37 werden hier die hinteren Radachsen 18 in die Montagestation 1 gefahren. In seiner Grundposition liegt das Fahrwerkmodul 25 gemäß Fig. 5 noch vollständig auf den Transportwagen 33, 35, 37 auf.

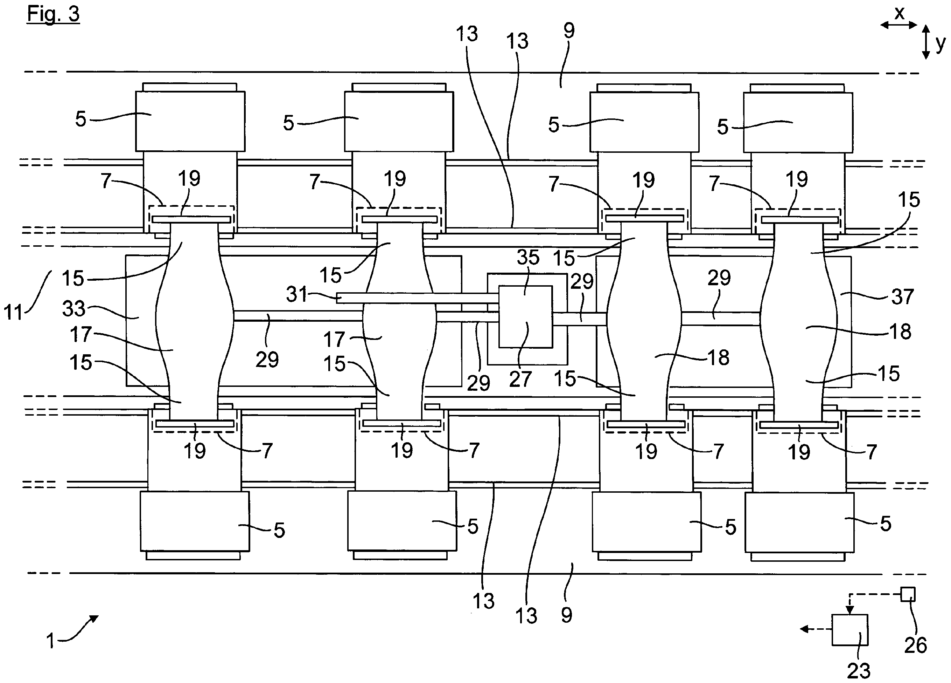

Nach Verlagerung des Fahrwerkmoduls 25 in die Grundposition werden die Positionierungseinheiten 5 dann derart in Montagestation-Längsrichtung x verlagert, dass jede Positionierungseinrichtung 3 in Montagestation-Querrichtung y mit einer Radachse 17, 18 des Fahrwerkmoduls 25 fluchtet. Anschließend werden die sich in ihrer Ausgangsstellung befindenden Radnaben-Fixiereinrichtungen 7 in Montagestation-Querrichtung y nach innen sowie in Montagestation-Hochrichtung z nach oben gefahren, bis sie in einer in Fig. 3 und Fig. 5 gezeigten Befestigungsstellung angeordnet sind. In dieser Befestigungsstellung können die Radachsen 17, 18 dann mit ihren Radnaben 15 an den zugeordneten Positionierungseinrichtungen 3 festgelegt werden. Die Verlagerung der Radnaben-Fixiereinrichtungen 7 in Montagestation-Hochrichtung z nach oben wird hier dabei über die den Positionierungseinheiten 5 zugeordneten Touchscreens 24 gesteuert.

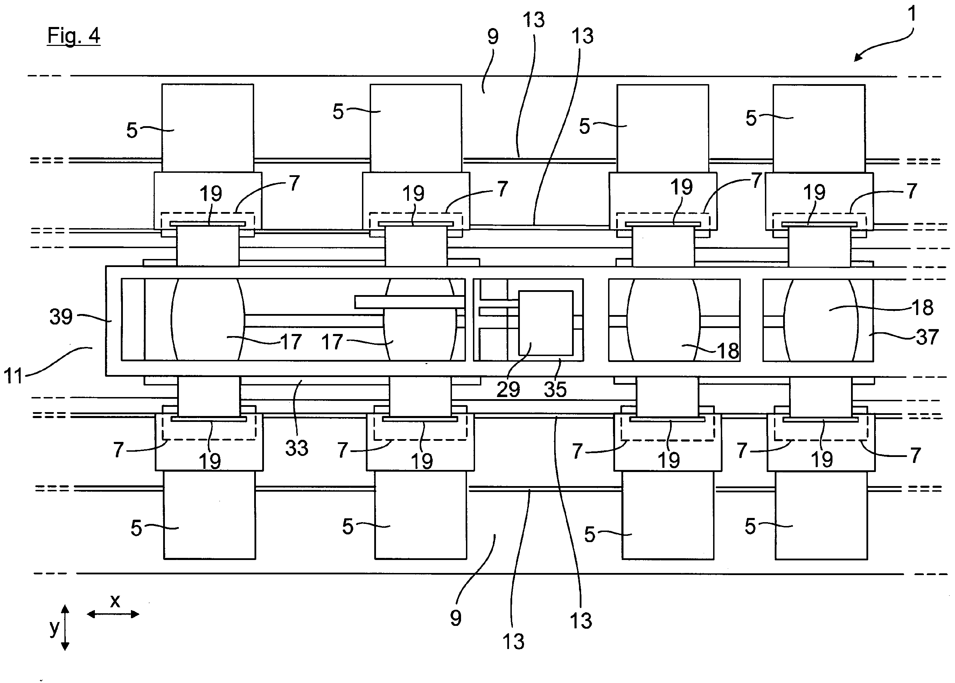

Nach Festlegung der Radachsen 17, 18 an den Positionierungseinrichtungen 3 wird dann ein Fahrgestellrahmen 39 (Fig. 4, Fig. 5) in die Montagestation 1 verlagert und dort ortsfest in einer definierten Rahmen-Montageposition angeordnet. Grundsätzlich muss die Verlagerung des Fahrgestellrahmens 39 in die Montagestation 1 natürlich nicht erst nach der Festlegung der Radachsen 17, 18 an den Positionierungseinrichtungen 3 erfolgen. Ebenso könnte die Verlagerung des Fahrgestellrahmen 39 in die Montagestation 1 beispielsweise auch vor der Verlagerung des Fahrwerkmoduls 25 in die Montagestation 1 oder gleichzeitig mit der Verlagerung des Fahrwerkmoduls 25 in die Montagestation 1 erfolgen. Die Verlagerung des Fahrgestellrahmens 39 in die Montagestation 1 sowie auch die Anordnung des Fahrgestellrahmens 39 in der Rahmen-Montageposition erfolgt hier beispielhaft mittels eines in der Fig. 5 schematisch angedeuteten Krans 41.

In Fig. 4 und Fig. 5 ist der Fahrgestellrahmen 39 in seiner Rahmen-Montageposition gezeigt. Gemäß Fig. 4 ist der Fahrgestellrahmen 39 in der Rahmen-Montageposition in Montagestation-Querrichtung y mittig zwischen den einander gegenüberliegend angeordneten Positionierungseinheiten 5 der jeweiligen Positionierungseinrichtung 3 angeordnet. Zudem ist der in der Rahmen-Montageposition angeordnete Fahrgestellrahmen 39 gemäß Fig. 5 von dem Montagestation-Boden 11 beabstandet angeordnet. Eine, in Fahrlage des Fahrgestellrahmens 39 gesehen, untere Seite 43 des Fahrgestellrahmens 39 ist hier dabei dem Montagestation-Boden 11 zugewandt. Der Fahrgestellrahmen 39 ist hier somit nicht rücklings, sondern in Fahrlage angeordnet. Des Weiteren ist der Fahrgestellrahmen 39 hier beispielhaft in seiner Rahmen-Montageposition, in Montagestation-Hochrichtung z gesehen, oberhalb des in der Grundposition angeordneten Fahrwerkmoduls 25 angeordnet.

Nach der Festlegung der Radachsen 17, 18 an den Positionierungseinrichtungen 3 und der Anordnung des Fahrgestellrahmens 39 in der definierten Rahmen-Montageposition ist die Einrichtung der Montagestation 1 beendet. Anschließend wird jede Radachse 17, 18 des Fahrwerkmoduls 25 mittels der jeweiligen Positionierungseinrichtung 3 in einem Positionierungsschritt relativ zu dem in der Rahmen-Montageposition angeordneten Fahrgestellrahmen 39 in eine definierte Radachsen-Montageposition gebracht, wobei in der Radachsen-Montageposition der jeweiligen Radachse 17, 18 wenigstens ein Teil von Verbindungspunkten der Radachse 17, 18 korrespondierenden Verbindungspunkten des Fahrgestellrahmens 25 zugeordnet sind. Die radachsenseitigen Verbindungspunkte können dabei beispielsweise, ebenso wie auch die rahmenseitigen Verbindungspunkte, durch Anlenkpunkte für einen Längslenker, für einen Querlenker oder für einen Stoßdämpfer gebildet sein. An den zugeordneten Verbindungspunkten werden die in die Radachsen-Montagepositionen gebrachten Radachsen 17, 18 und der in der Rahmen-Montageposition angeordnete Fahrgestellrahmen 39 dann miteinander verbunden.

Anschließend wird hier der Positionierungsschritt noch derart oft durchgeführt, bis die jeweilige Radachse 17, 18 vollständig an den Fahrgestellrahmen 39 montiert ist, wobei die jeweilige Radachse bei jedem Positionierungsschritt in eine andere Radachsen-Montageposition gebracht wird. Auf diese Weise werden die Radachsen 17, 18 hier derart oft mittels der Positionierungseinrichtungen 3 in unterschiedlichen Radachsen-Montagepositionen angeordnet, bis die Radachsen 17, 18 vollständig an dem Fahrgestellrahmen 39 montiert sind. Alternativ könnten die Radachsen 17, 18 in der Montagestation 1 aber auch nur teilweise an den Fahrgestellrahmen 39 montiert werden. Die weitere Montage der Radachsen 17, 18 könnte dann in einer auf die Montagestation 1 folgenden Montagestation durchgeführt werden.

Nach der Montage der Radachsen 17, 18 wird hier schließlich das Verteilergetriebe 27 an den Fahrgestellrahmen 39 montiert. Für diese Montage kann der Fahrgestellrahmen 39 beispielsweise mittels des Krans 41 derart weit abgesenkt werden, dass das Verteilergetriebe 27 montiert werden kann. Alternativ und/oder zusätzlich zur Absenkung des Fahrgestellrahmens 39 könnte an dem Transportwagen 35 auch eine Hubeinrichtung vorgesehen sein, mittels der das Verteilergetriebe 27 angehoben werden kann. Weiter alternativ könnte das Verteilergetriebe 27 hier aber auch erst provisorisch an dem Fahrgestellrahmen 39 befestigt werden und erst später in einer auf die Montagestation 1 folgenden Montagestation an den Fahrgestellrahmen 39 montiert werden. Weiter alternativ könnte das Verteilergetriebe 27 in der Montagestation 1 auch gar nicht an dem Fahrgestellrahmen 29 befestigt werden. Mittels des Transportwagens 35 könnte das Verteilergetriebe 27 dann in eine auf die Montagestation 1 folgende Montagestation verlagert werden, in der das Verteilergetriebe 27 schließlich an den Fahrgestellrahmen 39 montiert wird. Hierzu könnte auch das Fahrwerkmodul 25 zusammen mit dem Fahrgestellrahmen 39 mittels der Transportwagen 33, 35, 37 in die nächste Montagestation verlagert werden.

Die Verlagerung der Radachsen 17, 18 in Montagestation-Hochrichtung z sowie auch die Verdrehung der Radachsen 17, 18 um die jeweilige Längsachse A_{L} wird in dem jeweiligen Positionierungsschritt mittels der den Positionierungseinheiten 5 zugeordneten Touchscreens 24 gesteuert. Bevorzugt werden die Antriebseinrichtungen 21, 22 der Positionierungseinheiten 5 hier dabei in einem Master-Slave-Modus betrieben, in dem die Bewegung der Radnaben-Fixiereinrichtungen 7 der jeweiligen Positionierungseinrichtung 3 mittels einer Master-Slave-Steuerung gesteuert wird. Eine durch eine erste Radnaben-Fixiereinrichtung 7 der jeweiligen Positionierungseinrichtung 3 gebildete Slave-Fixiereinrichtung bewegt sich hier dabei stets parallel zu einer durch eine zweite Radnaben-Fixiereinrichtung 7 der jeweiligen Positionierungseinrichtung 3 gebildeten Master-Fixiereinrichtung. Auf diese Weise kann die Bewegung der beiden Radnaben-Fixiereinrichtungen 7 einer Positionierungseinrichtung 3 mittels eines einzigen Touchscreens 24 gesteuert werden.

Vorzugsweise kann die Slave-Fixiereinrichtung 7 dann auch in Montagestation-Hochrichtung z in einem eingeschränkten Bereich unabhängig von der Master-Fixiereinrichtung 7 bewegt werden. Dadurch kann die Position der Slave-Fixiereinrichtung 7 auf einfache Weise an Fertigungs- und/oder Montagetoleranzen angepasst werden.

Bevorzugt können die Antriebseinrichtungen 21, 22 der Positionierungseinheiten 5 auch in einem weiteren Master-Slave-Modus betrieben werden, in dem zwei, in Montagestation-Längsrichtung x gesehen, unmittelbar hintereinander angeordnete Positionierungseinrichtungen 3 mittels einer Master-Slave-Steuerung gesteuert werden. Bei dieser Master-Slave-Steuerung bewegen sich die Radnaben-Fixiereinrichtungen 7 der Slave-Positioniereinrichtung 3 dann in Montagestation-Hochrichtung z entgegengesetzt zu der Bewegung der Radnaben-Fixiereinrichtung 7 der Master-Positioniereinrichtung 3.

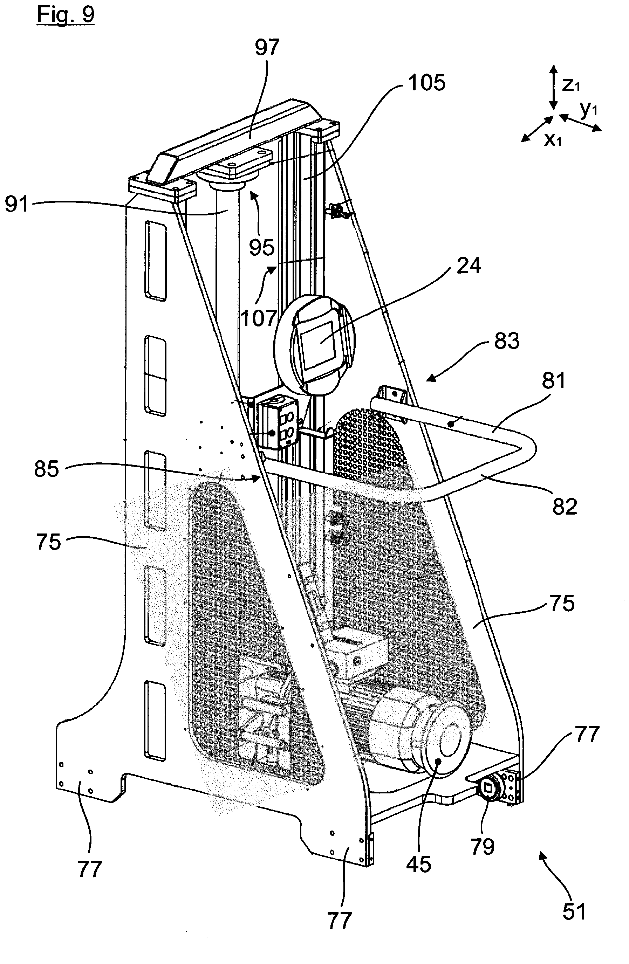

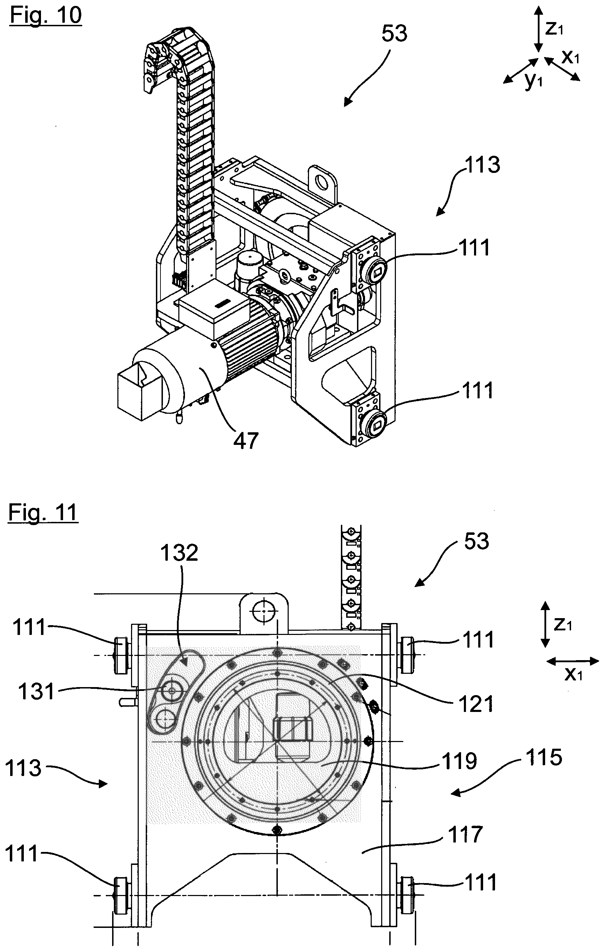

Des Weiteren können die Antriebseinrichtungen 21, 22 der Positionierungseinheiten 5 hier beispielhaft auch in einen Schwimmmodus geschaltet werden, in dem die Radnaben-Fixiereinrichtungen 7 derart von einem Antriebsmotor 45 (Fig. 9) der jeweiligen Z-Antriebseinrichtung 21 und von einem Antriebsmotor 47 (Fig. 10) der jeweiligen Drehantriebseinrichtung 22 entkoppelt sind, dass die Radnaben-Fixiereinrichtungen 7 in einem definierten Schwimmbereich manuell bzw. durch Personenkraft in Antriebsrichtung der jeweiligen Antriebsmotoren 45, 47 bewegt werden können.

Im Folgenden wird anhand der Fig. 6 bis 15 ein beispielhafter Aufbau der Positionierungseinheiten 5 näher erläutert:
In Fig. 6 ist die Positionierungseinheit 5 im zusammengebauten Zustand gezeigt. Eine Längsrichtung x₁ der Positionierungseinheit 5 entspricht hier der Montagestation-Längsrichtung x. Eine Querrichtung y₁ der Positionierungseinheit 5 entspricht der Montagestation-Querrichtung y. Eine Hochrichtung z₁ der Positionierungseinheit 5 entspricht der Montagestation-Hochrichtung z. Die Positionierungseinheit 5 weist hier beispielhaft eine mit gestrichelten Linien angedeutete Boden-Fixiereinrichtung 48, ein X-Schlittenelement 49, ein Y-Schlittenelement 51, ein Z-Schlittenelement 53 und die Radnaben-Fixiereinrichtung 7 auf.

Die Boden-Fixiereinrichtung 48 ist hier beispielhaft durch zwei Führungsschienen 55 gebildet, die ortsfest am Montagestation-Boden 11 bzw. an der Plattform 9 festgelegt werden können. Die Führungsschienen 55 verlaufen parallel zueinander in Positionierungseinheit-Längsrichtung x₁ und sind in Positionierungseinheit-Querrichtung y₁ voneinander beabstandet angeordnet. Mittels der Führungsschienen 55 ist hier beispielhaft das X-Schlittenelement 49 der Positionierungseinheit 5 in Positionierungseinheit-Längsrichtung x₁ relativ zu der Boden-Fixiereinrichtung 48 verlagerbar geführt. Konkret weist das X-Schlittenelement 49 hierzu zwei in Positionierungseinheit-Querrichtung y₁ voneinander beabstandet angeordnete Haltearme 57 auf, an denen jeweils mehrere, hier beispielhaft zwei, in Positionierungseinheit-Längsrichtung y₁ voneinander beabstandete Führungsrollen 59 drehbar festgelegt sind. Diese Führungsrollen 59 des X-Schlittenelements 49 werden mittels der Führungsschienen 55 der Boden-Fixiereinrichtung 48 geführt.

Des Weiteren weist die Positionierungseinheit 5 hier keine X-Antriebseinrichtung zur Verlagerung des X-Schlittenelements 49 in Positionierungseinheit-Längsrichtung x₁ auf. Anstelle dessen erfolgt die Verlagerung des X-Schlittenelements 49 hier, wie bereits erwähnt, manuell bzw. mit Personenkraft. Alternativ könnte aber natürlich auch eine X-Antriebseinrichtung, beispielsweise ein Kettentrieb und/oder ein Spindeltrieb, vorgesehen sein, mittels der das X-Schlittenelement 49 in die Positionierungseinheit-Längsrichtung x₁ verlagert werden kann.

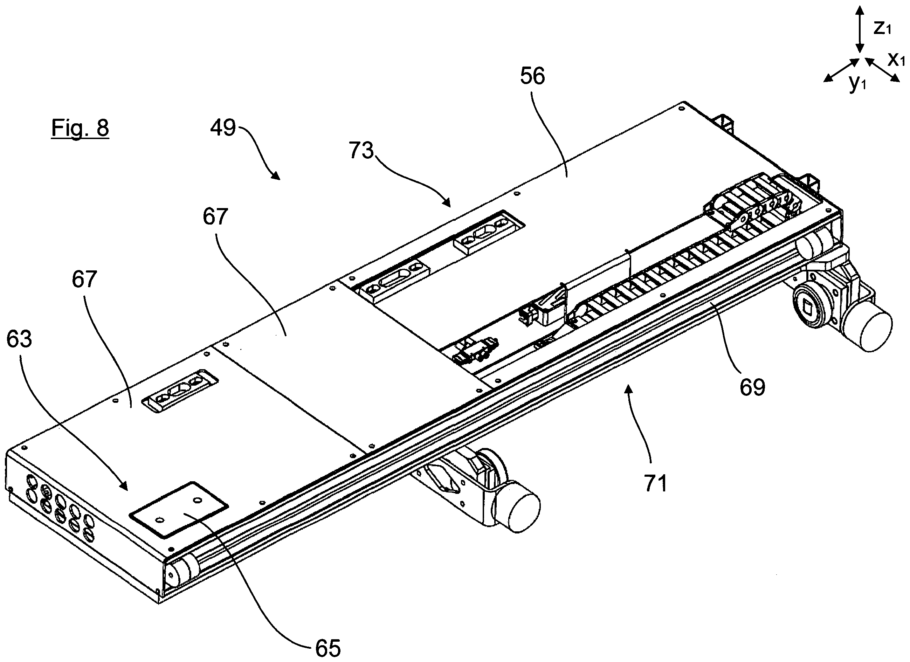

Zudem weist das X-Schlittenelement 49 hier gemäß Fig. 8 auch eine durch eine Person betätigbare Bremseinrichtung 63 auf, mittels der das X-Schlittenelement 49 gebremst bzw. abgebremst werden kann. Die Bremseinrichtung 63 weist hier beispielhaft eine Druckplatte 65 auf, durch deren Druckbeaufschlagung das X-Schlittenelement 49 gebremst wird. Weiter weist das X-Schlittenelement 49 hier beispielhaft auch eine Trittfläche 67 für eine die Positioniereinheit 5 bedienende Person auf. Die die Positioniereinheit 5 bedienende Person kann sich daher auf die Trittfläche 67 des X-Schlittenelements 49 stellen und sich zusammen mit dem X-Schlittenelement 49 in Positioniereinheit-Längsrichtung x₁ bewegen.

Des Weiteren weist das X-Schlittenelement 49 hier beispielhaft auch mehrere, hier beispielhaft zwei, Führungsschienen 69 auf, mittels denen das Y-Schlittenelement 61 (Fig. 6) in Positionierungseinheit-Querrichtung y₁ verlagerbar an dem X-Schlittenelement 49 geführt ist. Die Führungsschienen 69 verlaufen hier beispielhaft in Positionierungseinheit-Querrichtung y₁ parallel zueinander und sind in Positionierungseinheit-Längsrichtung x₁ voneinander beabstandet. Eine Führungsschiene 69 ist hier beispielhaft, in Positionierungseinheit-Querrichtung y₁ gesehen, seitlich außen an einer ersten Außenseite 71 des Grundkörpers 56 und die andere Führungsschiene 69 an einer der ersten Außenseite 71 gegenüberliegenden zweiten Außenseite 73 des Grundkörpers 56 angeordnet bzw. ausgebildet.

Wie aus Fig. 6 weiter hervorgeht, ist hier jeder Führungsschiene 69 ein hier im Wesentlichen plattenförmig ausgebildetes Stützelement 75 des Y-Schlittenelements 61 zugeordnet. Die plattenförmigen Stützelemente 75 sind hier beispielhaft in Positionierungseinheit-Hochrichtung z₁ ausgerichtet und mit einem definierten Abstand voneinander beabstandet angeordnet. Jedes Stützelement 75 weist hier zudem mehrere, hier beispielhaft zwei, in Positionierungseinheit-Querrichtung y₁ voneinander beabstandete Haltearme 77 auf, an denen jeweils eine Führungsrolle 79 (Fig. 9) drehbar festgelegt ist. Die Führungsrollen 79 des Y-Schlittenelements 51 sind in den Führungsschienen 69 des X-Schlittenelements 49 derart geführt, dass das Y-Schlittenelement 51 relativ zu dem X-Schlittenelement 49 in Positionierungseinheit-Querrichtung y₁ bewegt werden kann.

Weiter ist hier auch keine Y-Antriebseinrichtung vorgesehen, mittels der das Y-Schlittenelement 51 relativ zu dem X-Schlittenelement 49 verlagert werden kann. Anstelle dessen erfolgt die Verlagerung des Y-Schlittenelements 51 relativ zu dem X-Schlittenelement 49 hier, wie bereits erwähnt, ebenfalls manuell bzw. mit Personenkraft. In einer alternativen Ausgestaltung könnte aber natürlich auch eine Y-Antriebseinrichtung zur Verlagerung des Y-Schlittenelements 51 vorgesehen sein.

Gemäß Fig. 6 und Fig. 9 weist das Y-Schlittenelement 51 hier weiter ein durch eine Person greifbares Griffelement 81 auf, das hier beispielhaft U-förmig ausgebildet ist. Mit einem ersten Endbereich 83 ist das U-förmige Griffelement 81 hier an einem Stützelement 75 des Y-Schlittenelements 51 festgelegt. Mit einem zweiten Endbereich 85 ist das U-förmige Griffelement hier an dem anderem Stützelement 75 des Y-Schlittenelements 51 festgelegt. Zudem ragt das U-förmige Griffelement 81 hier mit einer U-Basis 82 von den Stützelementen 75 des Y-Schlittenelements 51 ab. Mittels des Griffelements 81 kann das Y-Schlittenelement 51 manuell in Positionierungseinheit-Querrichtung y₁ sowie auch in Positionierungseinheit-Längsrichtung x₁ verlagert werden. Des Weiteren kann sich eine auf der Trittfläche 67 des X-Schlittenelements 49 stehende Person auch mittels des Griffelements 81 abstützen.

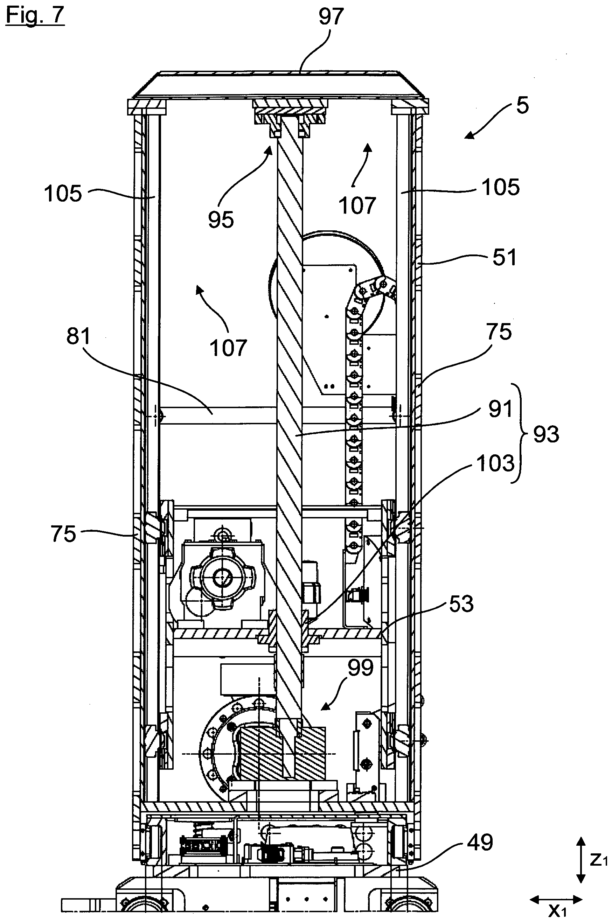

Wie in Fig. 9 weiter gezeigt ist, weist das Y-Schlittenelement 51 hier beispielhaft den Touchscreen 24 der Positionierungseinheit 5 auf. Der Touchscreen 24 ist hier beispielhaft derart angeordnet, dass er von einer auf der Trittfläche 67 (Fig. 6) des X-Schlittenelements 49 befindlichen Person betätigt werden kann. Gemäß Fig. 7 ist der Touchscreen 24 hier beispielhaft an einem Stützelement 75 des Y-Schlittenelements 51 festgelegt.

Wie aus Fig. 7 hervorgeht, weist das Y-Schlittenelement 51 hier weiter eine Spindel 91 eines Spindeltriebs 93 auf. Die stabförmige Spindel 91 ist dabei in Positionierungseinheit-Hochrichtung z₁ ausgerichtet. Mit einem Endbereich 95 ist die Spindel 91 hier drehbar an einer in Positionierungseinheit-Längsrichtung x₁ verlaufenden Traverse 97 des Y-Schlittenelements 51 festgelegt. Die Traverse 97 liegt auf den Stützelementen 75 des Y-Schlittenelements 51 auf und ist hier beispielhaft mittels Schraubverbindungen an den Stützelementen 75 festgelegt. Der andere Endbereich 99 der Spindel 91 ist hier beispielhaft über einen Schneckentrieb drehmomentübertragend mit dem hier als Elektromotor ausgebildeten Antriebsmotor 45 (Fig. 9) verbunden und drehbar an dem Y-Schlittenelement 51 festgelegt. Gemäß Fig. 7 ist die Spindel 91 in Eingriff mit einem korrespondierenden Führungselement 103 des Spindeltriebs 93. Das Führungselement 103 ist dem Z-Schlittenelement 53 zugeordnet bzw. an dem Z-Schlittenelement 53 festgelegt.

Gemäß Fig. 7 und Fig. 9 weist das Y-Schlittenelement 51 weiter auch mehrere, hier beispielhaft zwei, Führungsschienen 105 auf, mittels denen das Z-Schlittenelement 53 relativ zu dem Y-Schlittenelement 51 in Positionierungseinheit-Hochrichtung z₁ verlagerbar geführt ist. Die Führungsschienen 105 verlaufen parallel zueinander in Positionierungseinheit-Hochrichtung z₁ und sind in Positionierungseinheit-Längsrichtung x₁ voneinander beabstandet angeordnet. Konkret ist hier jedem Stützelement 75 des Y-Schlittenelements 51 eine Führungsschiene 105 zugeordnet. Die Führungsschienen 105 sind hier dabei an einer Innenseite 107 des jeweilige Stützelements 75 angeordnet bzw. ausgebildet.

Gemäß Fig. 7 und Fig. 10 weist das Z-Schlittenelement 53 weiter mehrere, hier beispielhaft vier, Führungsrollen 111 auf, mittels denen das Z-Schlittenelement 53 in den Führungsschienen 105 geführt ist. Das Z-Schlittenelement weist hier dabei, in Positionierungseinheit-Längsrichtung x₁ gesehen, seitlich außen an einer ersten Außenseite 113 mehrere, hier beispielhaft zwei, in Positionierungseinheit-Hochrichtung z₁ voneinander beabstandete Führungsrollen 111 auf. Zudem weist das Z-Schlittenelement 53 hier auch, in Positionierungseinheit-Längsrichtung x₁ gesehen, seitlich außen an einer zweiten Außenseite 115 mehrere, hier beispielhaft zwei, in Positionierungseinheit-Hochrichtung z₁ voneinander beabstandete Führungsrollen 111 auf.

Wie in Fig. 11 gezeigt ist, weist das Z-Schlittenelement 53 weiter ein relativ zu einem Grundkörper 117 des Z-Schlittenelements 53 um eine durch die Positionierungseinheit-Querrichtung y₁ gebildete Querachse verdrehbares Drehelement 119 auf, an der die Radnaben-Fixiereinrichtung 7 festgelegt werden kann. Das Drehelement 119 ist hier beispielhaft scheibenförmig ausgebildet und mittels eines Wälzlagers 121 relativ zu dem Grundkörper 117 verdrehbar an dem Grundkörper 117 festgelegt. Die Festlegung der Radnaben-Fixiereinrichtung 7 an dem Drehelement 119 erfolgt hier beispielhaft mittels einer Flanschverbindung.

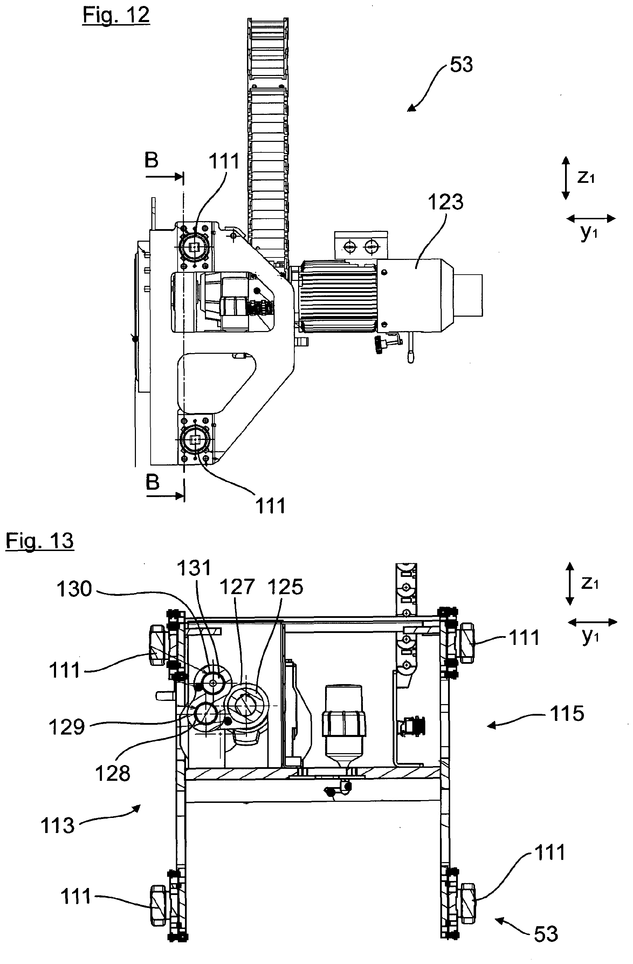

Gemäß Fig. 10 weist das Z-Schlittenelement 53 hier weiter den hier beispielhaft als Elektromotor ausgebildeten Antriebsmotor 47 auf, mittels dem das Drehelement 119 und somit auch die an dem Drehelement 119 festgelegte Radnaben-Fixiereinrichtung 7 relativ zu dem Grundkörper 117 verdreht werden kann. Gemäß Fig. 13 ist eine Antriebswelle 125 des Elektromotors 123 hier beispielhaft drehmomentübertragend mit einem ersten Hebelelement 127 des Z-Schlittenelements 53 verbunden. An dem ersten Hebelelement 127 ist über eine Buchse 128 ein zweites Hebelelement 129 des Z-Schlittenelements 53 relativ zu dem ersten Hebelelement 127 verdrehbar festgelegt bzw. gelagert. An dem zweiten Hebelelement 129 ist hier weiter über eine Buchse 130 ein Stabelement 131 drehbar festgelegt, das eine Führungsnut 132 (Fig. 11) des Z-Schlittenelements 53 durchragt und mit einem korrespondierenden Stabelement 133 der Radnaben-Fixiereinrichtung 7 verbunden werden kann.

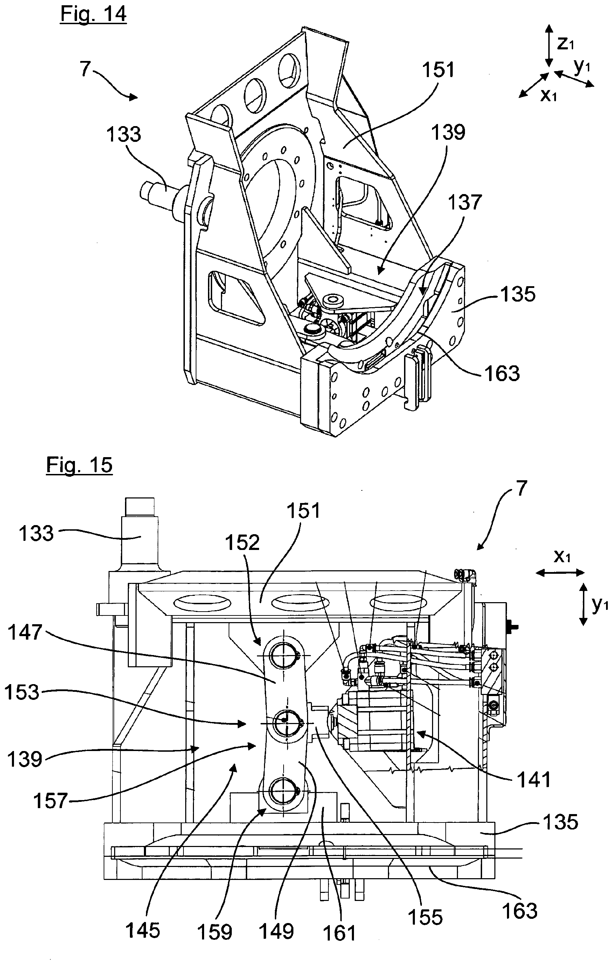

Wie in Fig. 14 und Fig. 15 gezeigt ist, weist die Radnaben-Fixiereinrichtung 7 der Positionierungseinheit 5 hier weiter eine Aufnahme 135 mit einem Aufnahmeraum 137 auf, in den das scheibenförmige Adapterelement 19 (Fig. 2) mit seinem Randbereich 20 eingesetzt werden kann. Zudem weist die Radnaben-Fixiereinrichtung 7 hier auch eine Spanneinrichtung 139 auf, mittels der das in den Aufnahmeraum 137 eingesetzte Adapterelement 19 eingespannt werden kann. Die Spanneinrichtung 139 weist hier beispielhaft eine hydraulische Betätigungseinrichtung 141 (Fig. 15) auf, mittels der ein Kniehebelmechanismus 145 der Spanneinrichtung 139 betätigt werden kann. Der Kniehebelmechanismus 145 weist mehrere, hier beispielhaft vier, stabförmige Hebelelemente 147, 149 auf.

Die beiden stabförmigen Hebelelemente 147, von denen in Fig. 15 nur einer ersichtlich ist, sind hier jeweils mit einem Endbereich 152 drehbar an einem Grundkörper 151 der Radnaben-Fixiereinrichtung 7 festgelegt. Mit einem anderen Endbereich 153 sind die Hebelelemente 147 drehbar an einem hydraulisch in Positionierungseinheit-Längsrichtung x₁ verlagerbaren Betätigungselement 155 der Betätigungseinrichtung 141 festgelegt. Die beiden anderen stabförmigen Hebelelemente 149, von denen in Fig. 15 ebenfalls nur einer ersichtlich ist, sind hier jeweils mit einem Endbereich 157 ebenfalls drehbar an dem Betätigungselement 155 festgelegt. Mit einem anderen Endbereich 159 sind die Hebelelemente 149 drehbar an einem relativ zu dem Grundkörper 151 in Positionierungseinheit-Querrichtung y₁ verlagerbaren Spannkörper 161 festgelegt, mittels dem das in dem Aufnahmeraum 137 angeordnete Adapterelement 19 gegen eine den Aufnahmeraum 137 begrenzende Wandung 163 gepresst bzw. gedrückt werden kann.

Der Kniehebelmechanismus 145 ist hier dabei derart ausgebildet, dass bei einer Ausrichtung der stabförmigen Hebelelemente 147, 149 in Positionierungseinheit-Querrichtung y₁ eine maximale Spannkraft zur Einspannung des in den Aufnahmeraum 137 eingesetzten Adapterelement 137 erreicht wird.

### Bezugszeichenliste

- 1: Montagestation
- 3: Positionierungseinrichtung
- 5: Positionierungseinheit
- 7: Radnaben-Fixiereinrichtung
- 9: Plattform
- 11: Montagestation-Boden
- 13: Führung
- 15: Radnabe
- 17: Radachse
- 18: Radachse
- 19: Adapterelement
- 20: Randbereich
- 21: Antriebseinrichtung
- 22: Antriebseinrichtung
- 23: Steuereinrichtung
- 24: Bedieneinrichtung
- 25: Fahrwerkmodul
- 27: Verteilergetriebe
- 29: Gelenkwelle
- 31: Antriebswelle
- 33: Transportwagen
- 35: Transportwagen
- 37: Transportwagen
- 39: Fahrgestellrahmen
- 41: Kran
- 43: Unterseite
- 45: Antriebsmotor
- 47: Antriebsmotor
- 48: Boden-Fixiereinrichtung
- 49: X-Schlittenelement
- 51: Y-Schlittenelement
- 53: Z-Schlittenelement
- 55: Führungsschiene
- 57: Haltearm
- 58: Grundkörper
- 59: Führungsrolle
- 63: Bremseinrichtung
- 65: Druckplatte
- 67: Trittfläche
- 69: Führungsschiene
- 71: erste Außenseite
- 73: zweite Außenseite
- 75: Stützelement
- 77: Haltearm
- 79: Führungsrolle
- 81: Griffelement
- 82: U-Basis
- 83: Endbereich
- 85: Endbereich
- 91: Spindel
- 93: Spindeltrieb
- 95: Endbereich
- 97: Traverse
- 99: Endbereich
- 103: Führungselement
- 105: Führungsschiene
- 107: Innenseite
- 111: Führungsrolle
- 113: erste Außenseite
- 115: zweite Außenseite
- 117: Grundkörper
- 119: Drehelement
- 121: Wälzlager
- 125: Antriebswelle
- 127: erstes Hebelelement
- 128: Buchse
- 129: zweites Hebelelement
- 130: Buchse
- 131: Stabelement
- 132: Führungsnut
- 133: Stabelement
- 135: Aufnahme
- 137: Aufnahmeraum
- 139: Spanneinrichtung
- 141: Betätigungseinrichtung
- 145: Kniehebelmechanismus
- 147: Hebelelement
- 149: Hebelelement
- 151: Grundkörper
- 152: Endbereich
- 153: Endbereich
- 155: Betätigungselement
- 157: Endbereich
- 159: Endbereich
- 161: Spannkörper
- 163: Wandung

## Patentansprüche

1. Verfahren zur Montage eines Fahrzeugs, insbesondere eines Nutzfahrzeugs, wobei zunächst in einem Einrichtungsschritt mittels einer ersten Transporteinrichtung (41) ein Fahrgestellrahmen (39) des Nutzfahrzeugs hin zu einer Montagestation (1) verlagert und dort ortsfest in einer definierten Rahmen-Montageposition angeordnet wird, wobei in dem Einrichtungsschritt zudem mittels einer zweiten Transporteinrichtung (33, 35, 37) wenigstens ein mehrere, insbesondere alle, Radachsen (17, 18) des Nutzfahrzeugs aufweisendes Fahrwerkmodul (25) ebenfalls hin zu der Montagestation (1) verlagert und dort in einer definierten Grundposition angeordnet wird, wobei in dem Einrichtungsschritt weiter jede Radachse (17, 18) des in der Grundposition angeordneten Fahrwerkmoduls (25) an einer der jeweiligen Radachse (17, 18) zugeordneten Positionierungseinrichtung (3) der Montagestation (1) festgelegt wird,
wobei anschließend jede festgelegte Radachse (17, 18) des Fahrwerkmoduls (25) mittels der jeweiligen Positionierungseinrichtung (3) in einem Positionierungsschritt relativ zu dem in der Rahmen-Montageposition angeordneten Fahrgestellrahmen (39) in eine definierte Radachsen-Montageposition gebracht wird, wobei in der Radachsen-Montageposition der jeweiligen Radachse (17, 18) wenigstens ein Teil von Verbindungspunkten der Radachse (17, 18) korrespondierenden Verbindungspunkten des Fahrgestellrahmens (39) zugeordnet ist,
wobei die in die Radachsen-Montagepositionen gebrachten Radachsen (17, 18) und der Fahrgestellrahmen (39) an den einander zugeordneten Verbindungspunkten miteinander verbunden werden, **dadurch gekennzeichnet,**
**dass** jede Positionierungseinrichtung (3) zwei in Montagestation-Querrichtung einander gegenüberliegend angeordnete Positionierungseinheiten (5) aufweist, wobei jede Positionierungseinheit eine Radnaben-Fixiereinrichtung (7) aufweist, an der eine Radnabe (15) einer Radachse (17, 18) festgelegt werden kann, und wobei jede Positionierungseinheit (5) eine Bewegungseinrichtung aufweist, mittels der die jeweilige Radnaben-Fixiereinrichtung (7) relativ zu dem Fahrgestellrahmen (39) bewegt, insbesondere relativ zu dem Fahrgestellrahmen (39) verlagert und/oder verdreht, werden kann.

2. Verfahren nach Anspruch 1, **dadurch gekennzeichnet, dass** der Positionierungsschritt derart oft durchgeführt wird, bis die jeweilige Radachse (17, 18) vollständig an den Fahrgestellrahmen (39) montiert ist, wobei die jeweilige Radachse (17, 18) bei jedem Positionierungsschritt in eine andere Radachsen-Montageposition gebracht wird.

3. Verfahren nach Anspruch 1 oder 2, **dadurch gekennzeichnet, dass** eine Steuereinrichtung (23) vorgesehen ist, mittels der die Positionierungseinrichtungen (3) geregelt und/oder gesteuert werden, wobei bevorzugt vorgesehen ist, dass jede Radnaben-Fixiereinrichtung (7) der Positionierungseinrichtungen (3) mittels der Steuereinrichtung (23), zeitlich gesehen, vor der Verlagerung des Fahrwerkmoduls (39) in die Montagestation (1) selbsttätig in eine definierte Ausgangsstellung gebracht wird.

4. Verfahren nach einem der vorhergehenden Ansprüche, **dadurch gekennzeichnet, dass** an einer ersten Radnaben-Fixiereinrichtung (7) der jeweiligen Positionierungseinrichtung (3) eine erste Radnabe (15) der zugeordneten Radachse (17, 18) festgelegt wird, wobei an einer zweiten Radnaben-Fixiereinrichtung (7) der jeweiligen Positionierungseinrichtung (3) eine zweite Radnabe (15) der zugeordneten Radachse (17, 18) festgelegt wird, wobei die Steuereinrichtung (23) in einen Master-Slave-Modus geschaltet werden kann, in dem die Bewegung der ersten und zweiten Radnaben-Fixiereinrichtung (7) wenigstens einer Positionierungseinrichtung (3) mittels einer Master-Slave-Steuerung gesteuert wird, und wobei eine durch die erste Radnaben-Fixiereinrichtung (7) der jeweiligen Positionierungseinrichtung (3) gebildete Slave-Fixiereinrichtung nach einer definierten Steuervorgabe der Bewegung einer durch die zweite Radnaben-Fixiereinrichtung (7) der jeweiligen Positionierungseinrichtung (3) gebildeten Master-Fixiereinrichtung folgt, wobei bevorzugt vorgesehen ist, dass sich die Slave-Fixiereinrichtung (7) parallel zu der Master-Fixiereinrichtung (7) bewegt.

5. Verfahren nach Anspruch 4, **dadurch gekennzeichnet, dass** die Slave-Fixiereinrichtung (7) in einem eingeschränkten Bereich unabhängig von der Master-Fixiereinrichtung (7) bewegt werden kann, wobei bevorzugt vorgesehen ist, dass die Slave-Fixiereinrichtung (7) in Montagestation-Längsrichtung (x) und/oder in Montagestation-Hochrichtung (z) in einem eingeschränkten Bereich unabhängig von der Master-Fixiereinrichtung (7) bewegt werden kann.

6. Verfahren nach einem der Ansprüche 3 bis 5, **dadurch gekennzeichnet, dass** die Steuereinrichtung (23) in einen Master-Slave-Modus geschaltet werden kann, in dem zwei, in Montagestation-Längsrichtung (x) gesehen, unmittelbar hintereinander angeordnete Positionierungseinrichtungen (3) mittels einer Master-Slave-Steuerung gesteuert werden, wobei sich die Radnaben-Fixiereinrichtungen (7) der Slave-Positionierungseinrichtung (3) in Montagestation-Hochrichtung (z) entgegengesetzt zu der Bewegung der Radnaben-Fixiereinrichtungen (7) der Master-Positionierungseinrichtung (3) bewegen.

7. Verfahren nach einem der Ansprüche 3 bis 6, **dadurch gekennzeichnet, dass** die Steuereinrichtung (23) in einen Schwimmmodus geschaltet werden kann, in dem wenigstens eine Radnaben-Fixiereinrichtung (7) derart von wenigstens einem Antriebsmotor (45, 47) der zugeordneten Bewegungseinrichtung entkoppelt ist, dass sie in einem definierten Schwimmbereich manuell in Antriebsrichtung des Antriebsmotors (45, 47) bewegt werden kann, wobei bevorzugt vorgesehen ist, dass die Antriebsrichtung der entkoppelten Antriebsmotoren (45, 47) durch die Montagestation-Längsrichtung (x) und/oder durch die Montagestation-Hochrichtung (z) gebildet ist.

8. Verfahren nach einem der vorhergehenden Ansprüche, **dadurch gekennzeichnet, dass** jeder Positionierungseinheit (5) eine durch eine Person betätigbare Bedieneinrichtung (24), insbesondere ein Joystick und/oder ein Touchscreen, zugeordnet ist, mittels der die jeweilige Positionierungseinheit (5) gesteuert werden kann.

9. Verfahren nach einem der vorhergehenden Ansprüche, **dadurch gekennzeichnet, dass** jede Radnabe (15) mittels der zugeordneten Positionierungseinheit (5) in Montagestation-Längsrichtung (x) und/oder in Montagestation-Querrichtung (y) und/oder in Montagestation-Hochrichtung (z) verlagert werden kann, und/oder dass jede Radachse (17, 18) mittels der zugeordneten Positionierungseinrichtung (3) um eine Längsachse (A_{L}) der Radachse (17, 18) verdreht werden kann.

10. Verfahren nach einem der vorhergehenden Ansprüche, **dadurch gekennzeichnet, dass** die Positionierungseinrichtungen (3) bodenseitig in der Montagestation (1) angeordnet sind, wobei der in der Rahmen-Montageposition angeordnete Fahrgestellrahmen (39) von dem Montagestation-Boden (11) beabstandet angeordnet ist, und wobei in der Rahmen-Montageposition eine, in Fahrlage des Fahrgestellrahmens (39) gesehen, untere Seite (43) des Fahrgestellrahmens (39) dem Montagestation-Boden (11) zugewandt ist, wobei bevorzugt vorgesehen ist, dass der in der Rahmen-Montageposition angeordnete Fahrgestellrahmen (39) mittels eines Krans (41) gehaltert ist.

11. Verfahren nach einem der vorhergehenden Ansprüche, **dadurch gekennzeichnet, dass** das Fahrwerkmodul (25) zwei vordere und zwei hintere Radachsen (17, 18), ein Verteilergetriebe (27) für einen Allradantrieb, mehrere Gelenkwellen (29) zur Verbindung der Radachsen und des Verteilergetriebes und eine Antriebswelle (31) zum Antreiben des Verteilergetriebes (27) aufweist.

12. Verfahren nach einem der vorhergehenden Ansprüche, **dadurch gekennzeichnet, dass** die Montagestation (1) vier in Montagestation-Längsrichtung (x) hintereinander angeordnete Positionierungseinrichtungen (3) aufweist, und/oder dass die Positionierungseinrichtungen (3), insbesondere über wenigstens eine Plattform (9), an einem Montagestation-Boden (11) festgelegt sind.

13. Vorrichtung zur Montage eines Fahrzeugs, insbesondere eines Nutzfahrzeugs, zur Durchführung eines Verfahrens nach einem der vorhergehenden Ansprüche, mit einer ersten Transporteinrichtung (41), mittels der ein Fahrgestellrahmen (39) des Fahrzeugs hin zu einer Montagestation (1) verlagerbar und dort ortsfest in einer definierten Rahmen-Montageposition anordenbar ist, und mit einer zweiten Transporteinrichtung (33, 35, 37), mittels der wenigstens ein mehrere, insbesondere alle, Radachsen (17, 18) des Fahrzeugs aufweisendes Fahrwerkmodul (25) ebenfalls hin zu der Montagestation (1) verlagerbar und dort in einer definierten Grundposition anordenbar ist, wobei jede Radachse (17, 18) des in der Grundposition angeordneten Fahrwerkmoduls (25) an einer der jeweiligen Radachse (17, 18) zugeordneten Positionierungseinrichtung (3) der Montagestation (1) festlegbar ist,
wobei jede festgelegte Radachse (17, 18) des Fahrwerkmoduls (25) mittels der jeweiligen Positionierungseinrichtung relativ zu dem in der Rahmen-Montageposition angeordneten Fahrgestellrahmen (39) in wenigstens eine definierte Radachsen-Montageposition bringbar ist, wobei in der Radachsen-Montageposition der jeweiligen Radachse (17, 18) wenigstens ein Teil von Verbindungspunkten der Radachse (17, 18) korrespondierenden Verbindungspunkten des Fahrgestellrahmens (39) zugeordnet ist, und
wobei die in die Radachsen-Montagepositionen gebrachten Radachsen (17, 18) und der Fahrgestellrahmen (39) an den einander zugeordneten Verbindungspunkten miteinander verbindbar sind, **dadurch gekennzeichnet,**
**dass** jede Positionierungseinrichtung (3) zwei in Montagestation-Querrichtung einander gegenüberliegend angeordnete Positionierungseinheiten (5) aufweist, wobei jede Positionierungseinheit eine Radnaben-Fixiereinrichtung (7) aufweist, an der eine Radnabe (15) einer Radachse (17, 18) festlegbar ist, und wobei jede Positionierungseinheit (5) eine Bewegungseinrichtung aufweist, mittels der die jeweilige Radnaben-Fixiereinrichtung (7) relativ zu dem Fahrgestellrahmen (39) bewegbar, insbesondere relativ zu dem Fahrgestellrahmen (39) verlagerbar und/oder verdrehbar, ist.

14. Positionierungseinheit für eine Vorrichtung nach Anspruch 13, mit einer Boden-Fixiereinrichtung (48), mittels der die Positionierungseinheit (5) bodenseitig festlegbar ist, mit einer Radnaben-Fixiereinrichtung (7), an der eine Radnabe (15) einer Fahrzeug-Radachse (17, 18), insbesondere einer Nutzfahrzeug-Radachse, festlegbar ist, und mit einer Bewegungseinrichtung, mittels der die Radnaben-Fixiereinrichtung (7) relativ zu der Boden-Fixiereinrichtung (48) bewegbar, insbesondere relativ zu der Boden-Fixiereinrichtung (48) verlagerbar und/oder verdrehbar, ist.

15. Positionierungseinheit nach Anspruch 14, **dadurch gekennzeichnet, dass** die Radnaben-Fixiereinrichtung (7) mittels der Bewegungseinrichtung relativ zu der Boden-Fixiereinrichtung (48) in Positionierungseinheit-Längsrichtung (x₁) und/oder in Positionierungseinheit-Querrichtung (y₁) und/oder in Positionierungseinheit-Hochrichtung (zi) verlagerbar ist, und/oder dass die Radnaben-Fixiereinrichtung (7) mittels der Bewegungseinrichtung relativ zu der Boden-Fixiereinrichtung (48) um eine durch die Positionierungseinheit-Querrichtung (y₁) gebildete Querachse verdrehbar ist.

16. Positionierungseinheit nach Anspruch 15, **dadurch gekennzeichnet, dass** die Bewegungseinrichtung ein X-Schlittenelement (49) aufweist, das relativ zu der Boden-Fixiereinrichtung (48) in Positionierungseinheit-Längsrichtung (x₁) verlagerbar an der Boden-Fixiereinrichtung (48) festgelegt ist, wobei bevorzugt vorgesehen ist, dass die Boden-Fixiereinrichtung (48) mehrere, insbesondere zwei, in Positionierungseinheit-Querrichtung (y₁) voneinander beabstandete Führungsschienen (55) aufweist, in denen das X-Schlittenelement (49) in Positionierungseinheit-Längsrichtung (x₁) relativ zu der Boden-Fixiereinrichtung (48) verlagerbar geführt ist.

17. Positionierungseinheit nach Anspruch 16, **dadurch gekennzeichnet, dass** die Bewegungseinrichtung eine X-Antriebseinrichtung aufweist, mittels der das X-Schlittenelement (49) in Positionierungseinheit-Längsrichtung (x₁) relativ zu der Boden-Fixiereinrichtung (48) verlagerbar ist, wobei bevorzugt vorgesehen ist, dass die Antriebseinrichtung durch einen Kettentrieb und/oder durch einen Spindeltrieb gebildet ist.

18. Positionierungseinheit nach Anspruch 16 oder 17, **dadurch gekennzeichnet, dass** das X-Schlittenelement (49) eine durch eine Person betätigbare Bremseinrichtung (63) aufweist, mittels der das X-Schlittenelement (49) bremsbar ist, und/oder dass das X-Schlittenelement (49) eine Trittfläche (67) für wenigstens eine die Positionierungseinheit (5) bedienende Person aufweist.

19. Positionierungseinheit nach einem der Ansprüche 16 bis 18, **dadurch gekennzeichnet, dass** die Bewegungseinrichtung ein Y-Schlittenelement (51) aufweist, das relativ zu dem X-Schlittenelement (49) in Positionierungseinheit-Querrichtung (y₁) verlagerbar an dem X-Schlittenelement (49) festgelegt ist, wobei bevorzugt vorgesehen ist, dass das X-Schlittenelement (49) mehrere, insbesondere zwei, in Positionierungseinheit-Längsrichtung (x₁) voneinander beabstandete Führungsschienen (69) aufweist, in denen das Y-Schlittenelement (51) in Positionierungseinheit-Längsrichtung (x₁) relativ zu dem Y-Schlittenelement (51) verlagerbar geführt ist.

20. Positionierungseinheit nach Anspruch 19, **dadurch gekennzeichnet, dass** die Bewegungseinrichtung eine Y-Antriebseinrichtung aufweist, mittels der das Y-Schlittenelement (51) relativ zu dem X-Schlittenelement (49) in Positionierungseinheit-Querrichtung (y₁) verlagerbar ist, wobei bevorzugt vorgesehen ist, dass die Antriebseinrichtung durch einen Kettentrieb und/oder durch einen Spindeltrieb gebildet ist.

21. Positionierungseinheit nach Anspruch 19 oder 20, **dadurch gekennzeichnet, dass** das Y-Schlittenelement (51) ein durch eine Person greifbares Griffelement (81) aufweist, mittels dem das Y-Schlittenelement (51) relativ zu dem X-Schlittenelement (49) in Positionierungseinheit-Querrichtung (y₁) manuell verlagerbar ist und/oder mittels dem sich eine auf einer Trittfläche (67) des X-Schlittenelements (49) befindliche Person abstützen kann, wobei bevorzugt vorgesehen ist, dass das Griffelement (81) im Wesentlichen U-förmig ausgebildet ist.

22. Positionierungseinheit nach einem der Ansprüche 19 bis 20, **dadurch gekennzeichnet, dass** das Y-Schlittenelement (51) eine durch eine Person betätigbare Bedieneinrichtung (24), insbesondere einen Touchscreen und/oder einen Joystick, aufweist, mittels der die Positionierungseinheit (5) bedienbar und/oder steuerbar ist.

23. Positionierungseinheit nach einem der Ansprüche 19 bis 20 **dadurch gekennzeichnet, dass** die Bewegungseinrichtung ein Z-Schlittenelement (53) aufweist, das relativ zu dem Y-Schlittenelement (51) in Positionierungseinheit-Hochrichtung (zi) verlagerbar an dem Y-Schlittenelement (51) festgelegt ist, wobei bevorzugt vorgesehen ist, dass das Y-Schlittenelement (51) mehrere, insbesondere zwei, in Positionierungseinheit-Längsrichtung (x₁) voneinander beabstandete Führungsschienen (105) aufweist, in denen das Z-Schlittenelement (53) in Positionierungseinheit-Hochrichtung (zi) relativ zu dem Y-Schlittenelement (51) verlagerbar geführt ist.

24. Positionierungseinheit nach Anspruch 23, **dadurch gekennzeichnet, dass** die Bewegungseinrichtung eine Z-Antriebseinrichtung (65, 93) aufweist, mittels der das Z-Schlittenelement (53) relativ zu dem Y-Schlittenelement (51) in Positionierungseinheit-Hochrichtung (zi) verlagerbar ist, wobei bevorzugt vorgesehen ist, dass die Antriebseinrichtung durch einen Kettentrieb und/oder durch einen Spindeltrieb (93) gebildet ist.

25. Positionierungseinheit nach Anspruch 23 oder 24, **dadurch gekennzeichnet, dass** die Radnaben-Fixiereinrichtung (7) relativ zu dem Z-Schlittenelement (53) um die durch die Positionierungseinheit-Querrichtung (y₁) gebildete Querachse verdrehbar an dem Z-Schlittenelement (53) festgelegt ist, wobei bevorzugt vorgesehen ist, dass das Z-Schlittenelement (53) ein relativ zu einem Grundkörper (117) des Z-Schlittenelements (53) um die Querachse verdrehbares Drehelement (119), insbesondere eine Drehscheibe, aufweist, an der die Radnaben-Fixiereinrichtung (7) festgelegt ist.

26. Positionierungseinheit nach Anspruch 25, **dadurch gekennzeichnet, dass** die Bewegungseinrichtung eine Drehantriebseinrichtung (47, 125, 127, 128, 129, 130, 131, 132, 133) aufweist, mittels der die Radnaben-Fixiereinrichtung (7) relativ zu dem Z-Schlittenelement (53) um die Querachse verdrehbar ist, wobei bevorzugt vorgesehen ist, dass die Drehantriebseinrichtung wenigstens ein, insbesondere zwei, Hebelelemente (127, 129) aufweist, mittels denen ein dem Z-Schlittenelement (53) zugeordneter Antriebsmotor (47) drehmomentübertragend mit der Radnaben-Fixiereinrichtung (7) verbunden ist.

27. Positionierungseinheit nach einem der Ansprüche 14 bis 26, **dadurch gekennzeichnet, dass** ein, insbesondere scheibenförmiges, Adapterelement (19) vorgesehen ist, mittels dem die Radnabe (15) an der Positionierungseinheit (5) festlegbar ist, wobei bevorzugt vorgesehen ist, dass das Adapterelement (19) über durch einen Lochkreis der Radnabe (15) gebildete Gewindebohrungen mit der Radnabe (15) verschraubt ist und/oder wobei bevorzugt vorgesehen ist, dass die Radnaben-Fixiereinrichtung (7) eine Aufnahme (135) mit einem Aufnahmeraum (137) aufweist, in dem das scheibenförmige Adapterelement (19) mit einem Scheibenrandbereich (20) anordenbar und/oder einsetzbar ist.

28. Positionierungseinheit nach Anspruch 27, **dadurch gekennzeichnet, dass** eine Spanneinrichtung (139) vorgesehen ist, mittels der das in den Aufnahmeraum (137) eingesetzte Adapterelement (19) einspannbar ist, wobei bevorzugt vorgesehen ist, dass die Spanneinrichtung (139) einen Kniehebelmechanismus (145) und/oder eine, insbesondere hydraulische und/oder pneumatische, Betätigungseinrichtung (141) aufweist.

## Claims

1. Method for assembling a vehicle, in particular a utility vehicle, wherein, first of all in an installation step, a chassis frame (39) of the utility vehicle is shifted by means of a first transport device (41) to an assembly station (1) and is arranged there in a positionally fixed manner in a defined frame assembly position, wherein, in addition, in the installation step, at least one running gear module (25) having a plurality of, in particular all of the, wheel axles (17, 18) of the utility vehicle is likewise shifted towards the assembly station (1) by means of a second transport device (33, 35, 37) and is arranged there in a defined basic position, wherein, furthermore, in the installation step, each wheel axle (17, 18) of the running gear module (25) arranged in the basic position is secured to a positioning device (3) of the assembly station (1), which positioning device is assigned to the respective wheel axle (17, 18),
wherein, subsequently, each secured wheel axle (17, 18) of the running gear module (25) is brought in a positioning step by means of the respective positioning device (3) relative to the chassis frame (39), which is arranged in the frame assembly position, into a defined wheel-axle assembly position, wherein, in the wheel-axle assembly position of the respective wheel axle (17, 18), at least a portion of connecting points of the wheel axle (17, 18) is assigned to corresponding connecting points of the chassis frame (39),
wherein the wheel axles (17, 18) brought into the wheel-axle assembly positions and the chassis frame (39) are connected to one another at the mutually assigned connecting points, **characterized in that**
each positioning device (3) has two positioning units (5) arranged lying opposite each other in the transverse direction of the assembly station, wherein each positioning unit has a wheel-hub fixing device (7) to which a wheel hub (15) of a wheel axle (17, 18) can be secured, and wherein each positioning unit (5) has a movement device by means of which the respective wheel-hub fixing device (7) can be moved relative to the chassis frame (39), in particular can be shifted and/or rotated relative to the chassis frame (39).

2. Method according to Claim 1, **characterized in that** the positioning step is carried out so frequently until the respective wheel axle (17, 18) is completely mounted on the chassis frame (39), wherein the respective wheel axle (17, 18) is brought into another wheel-axle assembly position during each positioning step.

3. Method according to Claim 1 or 2, **characterized in that** a control device (23) is provided by means of which the positioning devices (3) are regulated and/or controlled, wherein it is preferably provided that each wheel-hub fixing device (7) of the positioning devices (3) is automatically brought by means of the control device (23) into a defined starting position prior, as seen temporally, to the shifting of the running gear module (39) into the assembly station (1).

4. Method according to one of the preceding claims, **characterized in that** a first wheel hub (15) of the associated wheel axle (17, 18) is secured to a first wheel-hub fixing device (7) of the respective positioning device (3), wherein a second wheel hub (15) of the associated wheel axle (17, 18) is secured to a second wheel-hub fixing device (7) of the respective positioning device (3), wherein the control device (23) can be switched into a master-slave mode in which the movement of the first and second wheel-hub fixing device (7) of at least one positioning device (3) is controlled by means of a master-slave controller, and wherein, after a defined control stipulation, a slave fixing device formed by the first wheel-hub fixing device (7) of the respective positioning device (3) follows the movement of a master fixing device formed by the second wheel-hub fixing device (7) of the respective positioning device (3), wherein it is preferably provided that the slave fixing device (7) moves parallel to the master fixing device (7).

5. Method according to Claim 4, **characterized in that** the slave fixing device (7) can be moved within a limited range independently of the master fixing device (7), wherein it is preferably provided that the slave fixing device (7) can be moved within a limited range independently of the master fixing device (7) in the longitudinal direction (x) of the assembly station and/or in the vertical direction (z) of the assembly station.

6. Method according to one of Claims 3 to 5, **characterized in that** the control device (23) can be switched into a master-slave mode in which two positioning devices (3) arranged directly one behind the other, as seen in the longitudinal direction (x) of the assembly station, are controlled by means of a master-slave controller, wherein the wheel-hub fixing devices (7) of the slave positioning device (3) move in the vertical direction (z) of the assembly station in the opposite direction to the movement of the wheel-hub fixing devices (7) of the master positioning device (3).

7. Method according to one of Claims 3 to 6, **characterized in that** the control device (23) can be switched into a floating mode in which at least one wheel-hub fixing device (7) is decoupled from at least one driving motor (45, 47) of the associated movement device in such a manner that it can be moved manually within a defined floating range in the driving direction of the driving motor (45, 47), wherein it is preferably provided that the driving direction of the decoupled driving motors (45, 47) is formed by the longitudinal direction (x) of the assembly station and/or by the vertical direction (z) of the assembly station.

8. Method according to one of the preceding claims, **characterized in that** each positioning unit (5) is assigned an operating device (24), in particular a joystick and/or touchscreen, which is actuatable by a person and by means of which the respective positioning unit (5) can be controlled.

9. Method according to one of the preceding claims, **characterized in that** each wheel hub (15) can be shifted in the longitudinal direction (x) of the assembly station and/or in the transverse direction (y) of the assembly station and/or in the vertical direction (z) of the assembly station by means of the associated positioning device (5), and/or **in that** each wheel axle (17, 18) is rotatable about a longitudinal axis (A_{L}) of the wheel axle (17, 18) by means of the associated positioning device (3).

10. Method according to one of the preceding claims, **characterized in that** the positioning devices (3) are arranged on the floor side in the assembly station (1), wherein the chassis frame (39) arranged in the frame assembly position is arranged spaced apart from the assembly-station floor (11), and wherein, in the frame assembly position, a lower side (43) of the chassis frame (39), as seen in the travel position of the chassis frame (39), faces the assembly-station floor (11), wherein it is preferably provided that the chassis frame (39) arranged in the frame assembly position is held by means of a crane (41).

11. Method according to one of the preceding claims, **characterized in that** the running gear module (25) has two front and two rear wheel axles (17, 18), a transfer gearbox (27) for all-wheel drive, a plurality of propeller shafts (29) for the connection of the wheel axles and of the transfer gearbox, and a drive shaft (31) for driving the transfer gearbox (27).

12. Method according to one of the preceding claims, **characterized in that** the assembly station (1) has four positioning devices (3) arranged one behind another in the longitudinal direction (x) of the assembly station, and/or **in that** the positioning devices (3) are secured on an assembly-station floor (11), in particular via at least one platform (9).

13. Apparatus for assembling a vehicle, in particular a utility vehicle, in particular for carrying out a method according to one of the preceding claims, with a first transport device (41) by means of which a chassis frame (39) of the vehicle is shiftable towards an assembly station (1) and is arrangeable there in a positionally fixed manner in a defined frame assembly position, and with a second transport device (33, 35, 37) by means of which at least one running gear module (25) having a plurality of, in particular all of the, wheel axles (17, 18) of the vehicle is likewise shiftable towards the assembly station (1) and is arrangeable there in a defined basic position, wherein each wheel axle (17, 18) of the running gear module (25) arranged in the basic position is securable to a positioning device (3) of the assembly station (1), which positioning device is assigned to the respective wheel axle (17, 18),
wherein each fixed wheel axle (17, 18) of the running gear module (25) can be brought by means of the respective positioning device relative to the chassis frame (39), which is arranged in the frame assembly position, into at least one defined wheel-axle assembly position, wherein, in the wheel-axle assembly position of the respective wheel axle (17, 18), at least a portion of connecting points of the wheel axle (17, 18) is assigned to corresponding connecting points of the chassis frame (39), and
wherein the wheel axles (17, 18) brought into the wheel-axle assembly positions and the chassis frame (39) are connectable to one another at the respectively assigned connecting points, **characterized in that**
each positioning device (3) has two positioning units (5) arranged lying opposite each other in the transverse direction of the assembly station, wherein each positioning unit has a wheel-hub fixing device (7) to which a wheel hub (15) of a wheel axle (17, 18) is securable, and wherein each positioning unit (5) has a movement device by means of which the respective wheel-hub fixing device (7) is movable relative to the chassis frame (39), in particular is shiftable and/or rotatable relative to the chassis frame (39).

14. Positioning unit for an apparatus according to Claim 13, with a floor fixing device (48) by means of which the positioning unit (5) is securable on the floor side, with a wheel-hub fixing device (7) to which a wheel hub (15) of a vehicle wheel axle (17, 18), in particular a utility-vehicle wheel axle, is securable, and with a movement device by means of which the wheel-hub fixing device (7) is movable relative to the floor fixing device (48), in particular is shiftable and/or rotatable relative to the floor fixing device (48).

15. Positioning unit according to Claim 14, **characterized in that** the wheel-hub fixing device (7) is shiftable relative to the floor fixing device (48) in the longitudinal direction (x₁) of the positioning unit and/or in the transverse direction (y₁) of the positioning unit and/or in the vertical direction (z₁) of the positioning unit by means of the movement device, and/or **in that** the wheel-hub fixing device (7) is rotatable relative to the floor fixing device (48) about a transverse axis, which is formed by the transverse direction (y₁) of the positioning unit, by means of the movement device.

16. Positioning unit according to Claim 15, **characterized in that** the movement device has an X slide element (49) which is secured to the floor fixing device (48) so as to be shiftable relative to the floor fixing device (48) in the longitudinal direction (x₁) of the positioning unit, wherein it is preferably provided that the floor fixing device (48) has a plurality of, in particular two, guide rails (55) which are spaced apart from one another in the transverse direction (y₁) of the positioning unit and in which the X slide element (49) is guided so as to be shiftable relative to the floor fixing device (48) in the longitudinal direction (x₁) of the positioning unit.

17. Positioning unit according to Claim 16, **characterized in that** the movement device has an X driving device by means of which the X slide element (49) is shiftable relative to the floor fixing device (48) in the longitudinal direction (x₁) of the positioning unit, wherein it is preferably provided that the driving device is formed by a chain drive and/or by a spindle drive.

18. Positioning unit according to Claim 16 or 17, **characterized in that** the X slide element (49) has a braking device (63) which is actuatable by a person and by means of which the X slide element (49) can be braked, and/or **in that** the X slide element (49) has a stepping area (67) for at least one person operating the positioning unit (5).

19. Positioning unit according to one of Claims 16 to 18, **characterized in that** the movement device has a Y slide element (51) which is secured to the X slide element (49) so as to be shiftable relative to the X slide element (49) in the transverse direction (y₁) of the positioning unit, wherein it is preferably provided that the X slide element (49) has a plurality of, in particular two, guide rails (69) which are spaced apart from one another in the longitudinal direction (x₁) of the positioning unit and in which the Y slide element (51) is guided so as to be shiftable relative to the Y slide element (51) in the longitudinal direction (x₁) of the positioning unit.

20. Positioning unit according to Claim 19, **characterized in that** the movement device has a Y driving device by means of which the Y slide element (51) is shiftable relative to the X slide element (49) in the transverse direction (y₁) of the positioning unit, wherein it is preferably provided that the driving device is formed by a chain drive and/or by a spindle drive.

21. Positioning unit according to Claim 19 or 20, **characterized in that** the Y slide element (51) has a gripping element (81) which is graspable by a person and by means of which the Y slide element (51) is shiftable manually relative to the X slide element (49) in the transverse direction (y₁) of the positioning unit and/or by means of which a person located on a stepping area (67) of the X slide element (49) can be supported, wherein it is preferably provided that the gripping element (81) is of substantially U-shaped design.

22. Positioning unit according to one of Claims 19 to 20, **characterized in that** the Y slide element (51) has an operating device (24), in particular a touchscreen and/or a joystick, which is actuatable by a person and by means of which the positioning unit (5) is operable and/or controllable.

23. Positioning unit according to one of Claims 19 to 20, **characterized in that** the movement device has a Z slide element (53) which is secured to the Y slide element (51) so as to be shiftable relative to the Y slide element (51) in the vertical direction (z₁) of the positioning unit, wherein it is preferably provided that the Y slide element (51) has a plurality of, in particular two, guide rails (105) which are spaced apart from one another in the longitudinal direction (x₁) of the positioning unit and in which the Z slide element (53) is guided so as to be shiftable relative to the Y slide element (51) in the vertical direction (zi) of the positioning unit.

24. Positioning unit according to Claim 23, **characterized in that** the movement device has a Z driving device (65, 93) by means of which the Z slide element (53) is shiftable relative to the Y slide element (51) in the vertical direction (zi) of the positioning unit, wherein it is preferably provided that the driving device is formed by a chain drive and/or by a spindle drive (93).

25. Positioning unit according to Claim 23 or 24, **characterized in that** the wheel-hub fixing device (7) is secured to the Z slide element (53) so as to be rotatable relative to the Z slide element (53) about the transverse axis formed by the transverse direction (y₁) of the positioning unit, wherein it is preferably provided that the Z slide element (53) has a rotary element (119) which is rotatable about the transverse axis relative to a basic body (117) of the Z slide element (53), in particular a rotary disc to which the wheel-hub fixing device (7) is secured.

26. Positioning unit according to Claim 25, **characterized in that** the movement device has a rotary driving device (47, 125, 127, 128, 129, 130, 131, 132, 133) by means of which the wheel-hub fixing device (7) is rotatable about the transverse axis relative to the Z slide element (53), wherein it is preferably provided that the rotary driving device has at least one, in particular two, lever elements (127, 129) by means of which a driving motor (47) assigned to the Z slide element (53) is connected in a torque-transmitting manner to the wheel-hub fixing device (7).

27. Positioning unit according to one of Claims 14 to 26, **characterized in that** an in particular disc-shaped adapter element (19) is provided by means of which the wheel hub (15) is securable to the positioning unit (5), wherein it is preferably provided that the adapter element (19) is screwed to the wheel hub (15) via threaded bores formed by a circle of holes in the wheel hub (15), and/or wherein it is preferably provided that the wheel-hub fixing device (7) has a receptacle (135) with a receiving space (137) in which the disc-shaped adapter element (19) is arrangeable and/or insertable with a disc edge region (20).

28. Positioning unit according to Claim 27, **characterized in that** a clamping device (139) is provided by means of which the adapter element (19) inserted into the receiving space (137) can be clamped, wherein it is preferably provided that the clamping device (139) has a toggle lever mechanism (145) and/or an, in particular hydraulic and/or pneumatic, actuating device (141).

## Revendications

1. Procédé d'assemblage d'un véhicule, notamment d'un véhicule utilitaire, selon lequel, tout d'abord, dans une étape de mise en place, un cadre de châssis roulant (39) du véhicule utilitaire est déplacé au moyen d'un premier dispositif de transport (41) jusqu'à une station d'assemblage et y est disposé en position fixe dans une position d'assemblage de cadre définie, dans l'étape de mise en place, en plus de cela, au moins un module de châssis roulant (25) qui possède plusieurs, notamment tous les essieux (17, 18) du véhicule utilitaire étant également déplacé au moyen d'un deuxième dispositif de transport (33, 35, 37) jusqu'à la station d'assemblage (1) et y est disposé dans une position de base définie, dans l'étape de mise en place, en outre, chaque essieu (17, 18) du module de châssis roulant (25) disposé dans la position de base étant calé au niveau d'un dispositif de positionnement (3) de la station d'assemblage (1) qui est associé à l'un des essieux (17, 18) respectifs,
ensuite, chaque essieu (17, 18) calé du module de châssis roulant (25) étant, dans une étape de positionnement, amené au moyen du dispositif de positionnement (3) respectif dans une position d'assemblage définie par rapport au cadre de châssis roulant (39) disposé dans la position d'assemblage de cadre, au moins une partie des points de liaison de l'essieu (17, 18), dans la position d'assemblage d'essieu de l'essieu (17, 18) respectif, étant associée à des points de liaison correspondants du cadre de châssis roulant (39),
les essieux (17, 18) amenés dans les positions d'assemblage d'essieu et le cadre de châssis roulant (39) étant reliés entre eux au niveau des points de liaison associés les uns aux autres, **caractérisé en ce**
**que** chaque dispositif de positionnement (3) possède deux unités de positionnement (5), disposées en vis-à-vis l'une de l'autre dans la direction transversale de la station d'assemblage, chaque unité de positionnement possédant un dispositif de fixage de moyeu de roue (7) au niveau duquel peut être calé un moyeu de roue (15) d'un essieu (17, 18), et chaque unité de positionnement (5) possédant un dispositif de mouvement au moyen duquel le dispositif de fixage de moyeu de roue (7) respectif peut être déplacé par rapport au cadre de châssis roulant (39), notamment décalé et/ou tourné par rapport au cadre de châssis roulant (39).

2. Procédé selon la revendication 1, **caractérisé en ce que** l'étape de positionnement est exécutée aussi fréquemment que nécessaire jusqu'à ce que l'essieu (17, 18) respectif soit entièrement assemblé sur le cadre de châssis roulant (39), l'essieu (17, 18) respectif étant amené dans une autre position d'assemblage d'essieu à chaque étape de positionnement.

3. Procédé selon la revendication 1 ou 2, **caractérisé en ce qu'**un dispositif de commande (23) est présent, au moyen duquel les dispositifs de positionnement (3) sont régulés et/ou commandés, en prévoyant de préférence que chaque dispositif de fixage de moyeu de roue (7) des dispositifs de positionnement (3) est amené automatiquement dans une position initiale définie au moyen du dispositif de commande (23), du point de vue temporel avant le déplacement du module de châssis roulant (39) dans la station d'assemblage (1).

4. Procédé selon l'une des revendications précédentes, **caractérisé en ce qu'**un premier moyeu de roue (15) de l'essieu (17, 18) associé est calé au niveau d'un premier dispositif de fixage de moyeu de roue (7) du dispositif de positionnement (3) respectif, un deuxième moyeu de roue (15) de l'essieu (17, 18) associé étant calé au niveau d'un deuxième dispositif de fixage de moyeu de roue (7) du dispositif de positionnement (3) respectif, le dispositif de commande (23) pouvant être commuté dans un mode maître-esclave dans lequel le mouvement du premier et du deuxième dispositif de fixage de moyeu de roue (7) d'au moins un dispositif de positionnement (3) est commandé au moyen d'une commande maître-esclave, et un dispositif de fixage esclave formé par le premier dispositif de fixage de moyeu de roue (7) du dispositif de positionnement (3) respectif suit le mouvement d'un dispositif de fixage maître formé par le deuxième dispositif de fixage de moyeu de roue (7) du dispositif de positionnement (3) respectif conformément à une consigne de commande définie, en prévoyant de préférence que le dispositif de fixage esclave (7) se déplace parallèlement au dispositif de fixage maître (7).

5. Procédé selon la revendication 4, **caractérisé en ce que** le dispositif de fixage esclave (7) peut être déplacé dans une zone restreinte indépendamment du dispositif de fixage maître (7), en prévoyant de préférence que le dispositif de fixage esclave (7) peut être déplacé dans la direction longitudinale de la station d'assemblage (x) et/ou dans le sens de la hauteur de la station d'assemblage (z) dans une zone restreinte indépendamment du dispositif de fixage maître (7).

6. Procédé selon l'une des revendications 3 à 5, **caractérisé en ce que** le dispositif de commande (23) peut être commuté dans un mode maître-esclave dans lequel deux dispositifs de positionnement (3), disposés immédiatement l'un derrière l'autre vus dans la direction longitudinale de la station d'assemblage (x), sont commandés au moyen d'une commande maître-esclave, les dispositifs de fixage de moyeu de roue (7) du dispositif de positionnement esclave (3) se déplaçant dans le sens de la hauteur de la station d'assemblage (z) à l'opposé du mouvement des dispositifs de fixage de moyeu de roue (7) du dispositif de positionnement maître (3).

7. Procédé selon l'une des revendications 3 à 6, **caractérisé en ce que** le dispositif de commande (23) peut être commuté dans un mode flottant, dans lequel au moins un dispositif de fixage de moyeu de roue (7) est désaccouplé d'au moins un moteur d'entraînement (45, 47) du dispositif de mouvement associé de telle sorte qu'il peut être déplacé manuellement dans une zone de flottement définie dans la direction d'entraînement du moteur d'entraînement (45, 47), en prévoyant de préférence que la direction d'entraînement des moteurs d'entraînement (45, 47) désaccouplés est formée par la direction longitudinale de la station d'assemblage (x) et/ou par le sens de la hauteur de la station d'assemblage (z).

8. Procédé selon l'une des revendications précédentes, **caractérisé en ce qu'**à chaque unité de positionnement (5) est associé un dispositif d'opération (24) pouvant être actionné par une personne, notamment une manette de commande et/ou un écran tactile, au moyen duquel peut être commandée l'unité de positionnement (5) respective.

9. Procédé selon l'une des revendications précédentes, **caractérisé en ce que** chaque moyeu de roue (15) peut être décalé au moyen de l'unité de positionnement (5) associée dans la direction longitudinale de la station d'assemblage (x) et/ou dans le sens transversal de la station d'assemblage (y) et/ou dans le sens de la hauteur de la station d'assemblage (z), et/ou **en ce que** chaque essieu (17, 18) peut être tourné au moyen du dispositif de positionnement (3) associé autour d'un axe longitudinal (A_{L}) de l'essieu (17, 18).

10. Procédé selon l'une des revendications précédentes, **caractérisé en ce que** les dispositifs de positionnement (3) sont disposés du côté du sol dans la station d'assemblage (1), le cadre de châssis roulant (39) disposé dans la position d'assemblage de cadre étant disposé espacé du sol de station d'assemblage (11), et dans la position d'assemblage de cadre, un côté inférieur (43) du cadre de châssis roulant (39), vu dans la position de déplacement du cadre de châssis roulant (39), faisant face au sol de station d'assemblage (11), en prévoyant de préférence que le cadre de châssis roulant (39) disposé dans la position d'assemblage de cadre est maintenu au moyen d'une grue (41).

11. Procédé selon l'une des revendications précédentes, **caractérisé en ce que** le module de châssis roulant (25) possède deux essieux avant et deux essieux arrière (17, 18), une boîte de transfert (27) pour une transmission intégrale, plusieurs arbres articulés (29) destinés à relier les essieux et la boîte de transfert et un arbre d'entraînement (31) servant à entraîner la boîte de transfert (27).

12. Procédé selon l'une des revendications précédentes, **caractérisé en ce que** la station d'assemblage (1) possède quatre dispositifs de positionnement (3) disposés les uns derrière les autres dans la direction longitudinale de la station d'assemblage (x) et/ou **en ce que** les dispositifs de positionnement (3) sont calés au niveau d'un sol de station d'assemblage (11), notamment par le biais d'au moins une plate-forme (9).

13. Arrangement d'assemblage d'un véhicule, notamment d'un véhicule utilitaire, destiné à mettre en œuvre un procédé selon l'une des revendications précédentes, comprenant un premier dispositif de transport (41) au moyen duquel un cadre de châssis roulant (39) du véhicule utilitaire peut être déplacé jusqu'à une station d'assemblage et peut y être disposé en position fixe dans une position d'assemblage de cadre définie, et comprenant un deuxième dispositif de transport (33, 35, 37), au moyen duquel au moins un module de châssis roulant (25) qui possède plusieurs, notamment tous les essieux (17, 18) du véhicule peut également être déplacé jusqu'à la station d'assemblage (1) et peut y être disposé dans une position de base définie, chaque essieu (17, 18) du module de châssis roulant (25) disposé dans la position de base pouvant être calé au niveau d'un dispositif de positionnement (3) de la station d'assemblage (1) qui est associé à l'un des essieux (17, 18) respectifs,
chaque essieu (17, 18) calé du module de châssis roulant (25) pouvant être amené au moyen du dispositif de positionnement respectif dans au moins une position d'assemblage définie par rapport au cadre de châssis roulant (39) disposé dans la position d'assemblage de cadre, au moins une partie des points de liaison de l'essieu (17, 18), dans la position d'assemblage d'essieu de l'essieu (17, 18) respectif, étant associée à des points de liaison correspondants du cadre de châssis roulant (39),
les essieux (17, 18) amenés dans les positions d'assemblage d'essieu et le cadre de châssis roulant (39) pouvant être reliés entre eux au niveau des points de liaison associés les uns aux autres, **caractérisé en ce**
**que** chaque dispositif de positionnement (3) possède deux unités de positionnement (5), disposées en vis-à-vis l'une de l'autre dans la direction transversale de la station d'assemblage, chaque unité de positionnement possédant un dispositif de fixage de moyeu de roue (7) au niveau duquel peut être calé un moyeu de roue (15) d'un essieu (17, 18), et chaque unité de positionnement (5) possédant un dispositif de mouvement au moyen duquel le dispositif de fixage de moyeu de roue (7) respectif peut être déplacé par rapport au cadre de châssis roulant (39), peut notamment être décalé et/ou tourné par rapport au cadre de châssis roulant (39).

14. Unité de positionnement pour un arrangement selon la revendication 13, comprenant un dispositif de fixage au sol (48) au moyen duquel l'unité de positionnement (5) peut être calée au niveau du sol, comprenant un dispositif de fixage de moyeu de roue (7) au niveau duquel peut être calé un moyeu de roue (15) d'un essieu de véhicule (17, 18), notamment d'un essieu de véhicule utilitaire, et comprenant un dispositif de mouvement au moyen duquel le dispositif de fixage de moyeu de roue (7) peut être déplacé par rapport au dispositif de fixage au sol (48), peut notamment être décalé et/ou tourné par rapport au dispositif de fixage au sol (48).

15. Unité de positionnement selon la revendication 14, **caractérisée en ce que** le dispositif de fixage de moyeu de roue (7) peut être décalé au moyen du dispositif de mouvement par rapport au dispositif de fixage au sol (48) dans la direction longitudinale d'unité de positionnement (x₁) et/ou dans la direction transversale d'unité de positionnement (y₁) et/ou dans le sens de la hauteur d'unité de positionnement (z₁), et/ou **en ce que** le dispositif de fixage de moyeu de roue (7) peut être tourné au moyen du dispositif de mouvement par rapport au dispositif de fixage au sol (48) autour d'un axe transversal formé par la direction transversale d'unité de positionnement (y₁).

16. Unité de positionnement selon la revendication 15, **caractérisée en ce que** le dispositif de mouvement possède un élément chariot X (49), qui est calé au niveau du dispositif de fixage au sol (48) de manière à pouvoir être déplacé dans la direction longitudinale d'unité de positionnement (x₁) par rapport au dispositif de fixage au sol (48), en prévoyant de préférence que le dispositif de fixage au sol (48) possède plusieurs, notamment deux rails de guidage (55) espacés l'un de l'autre dans la direction transversale d'unité de positionnement (y₁), dans lesquels l'élément chariot X (49) est guidé de manière à pouvoir être déplacé dans la direction longitudinale d'unité de positionnement (x₁) par rapport au dispositif de fixage au sol (48).

17. Unité de positionnement selon la revendication 16, **caractérisée en ce que** le dispositif de mouvement possède un dispositif d'entraînement X au moyen duquel l'élément chariot X (49) peut être déplacé dans la direction longitudinale d'unité de positionnement (x₁) par rapport au dispositif de fixage au sol (48), en prévoyant de préférence que le dispositif d'entraînement est formé par une transmission par chaîne et/ou par une transmission par broche.

18. Unité de positionnement selon la revendication 16 ou 17, **caractérisée en ce que** l'élément chariot X (49) possède un dispositif de freinage (63) actionnable par une personne, au moyen duquel l'élément chariot X (49) peut être freiné, et/ou **en ce que** l'élément chariot X (49) possède une surface de marche (67) pour au moins une personne qui sert l'unité de positionnement (5).

19. Unité de positionnement selon l'une des revendications 16 à 18, **caractérisée en ce que** le dispositif de mouvement possède un élément chariot Y (51), qui est calé au niveau de l'élément chariot X (49) de manière à pouvoir être déplacé dans la direction transversale d'unité de positionnement (y₁) par rapport à l'élément chariot X (49), en prévoyant de préférence que l'élément chariot X (49) possède plusieurs, notamment deux rails de guidage (69) espacés l'un de l'autre dans la direction longitudinale d'unité de positionnement (x₁), dans lesquels l'élément chariot Y (51) est guidé de manière à pouvoir être déplacé dans la direction longitudinale d'unité de positionnement (x₁) par rapport à l'élément chariot Y (51).

20. Unité de positionnement selon la revendication 19, **caractérisée en ce que** le dispositif de mouvement possède un dispositif d'entraînement Y au moyen duquel l'élément chariot Y (51) peut être déplacé dans la direction transversale d'unité de positionnement (y₁) par rapport à l'élément chariot X (49), en prévoyant de préférence que le dispositif d'entraînement est formé par une transmission par chaîne et/ou par une transmission par broche.

21. Unité de positionnement selon la revendication 19 ou 20, **caractérisée en ce que** l'élément chariot Y (51) possède un élément de préhension (81) pouvant être saisi par une personne, au moyen duquel l'élément chariot Y (51) peut être déplacé manuellement dans la direction transversale d'unité de positionnement (y₁) par rapport à l'élément chariot X (49) et/ou au moyen duquel une personne qui se trouve sur une surface de marche (67) de l'élément chariot X (49) peut prendre appui, en prévoyant de préférence que l'élément de préhension (81) est réalisé sensiblement en forme de U.

22. Unité de positionnement selon l'une des revendications 19 à 20, **caractérisée en ce que** l'élément chariot Y (51) possède un dispositif d'opération (24) pouvant être actionné par une personne, notamment un écran tactile et/ou une manette de commande, au moyen duquel peut être actionnée et/ou commandée l'unité de positionnement (5).

23. Unité de positionnement selon l'une des revendications 19 à 20, **caractérisée en ce que** le dispositif de mouvement possède un élément chariot Z (53), qui est calé au niveau de l'élément chariot Y (51) de manière à pouvoir être déplacé dans le sens de la hauteur d'unité de positionnement (zi) par rapport à l'élément chariot Y (51), en prévoyant de préférence que l'élément chariot Y (51) possède plusieurs, notamment deux rails de guidage (105) espacés l'un de l'autre dans la direction longitudinale d'unité de positionnement (x₁), dans lesquels l'élément chariot Z (53) est guidé de manière à pouvoir être déplacé dans le sens de la hauteur d'unité de positionnement (z₁) par rapport à l'élément chariot Y (51).

24. Unité de positionnement selon la revendication 23, **caractérisée en ce que** le dispositif de mouvement possède un dispositif d'entraînement Z (65, 93) au moyen duquel l'élément chariot Z (53) peut être déplacé dans le sens de la hauteur d'unité de positionnement (zi) par rapport à l'élément chariot Y (51), en prévoyant de préférence que le dispositif d'entraînement est formé par une transmission par chaîne et/ou par une transmission par broche (93).

25. Unité de positionnement selon la revendication 23 ou 24, **caractérisée en ce que** le dispositif de fixage de moyeu de roue (7) est calé au niveau de l'élément chariot Z (53) de manière à pouvoir tourner par rapport à l'élément chariot Z (53) autour de l'axe transversal formé par la direction transversale d'unité de positionnement (y₁), en prévoyant de préférence que l'élément chariot Z (53) possède un élément rotatif (119) qui peut tourner autour de l'axe transversal par rapport à un corps de base (117) de l'élément chariot Z (53), notamment un plateau tournant au niveau duquel est calé le dispositif de fixage de moyeu de roue (7).

26. Unité de positionnement selon la revendication 25, **caractérisée en ce que** le dispositif de mouvement possède un dispositif d'entraînement rotatif (47, 125, 127, 128, 129, 130, 131, 132, 133) au moyen duquel le dispositif de fixage de moyeu de roue (7) peut tourner autour de l'axe transversal par rapport à l'élément chariot Z (53), en prévoyant de préférence que le dispositif d'entraînement rotatif possède au moins un, notamment deux éléments leviers (127, 129) au moyen desquels un moteur d'entraînement (47) associé à l'élément chariot Z (53) est relié avec transmission de couple au dispositif de fixage de moyeu de roue (7).

27. Unité de positionnement selon l'une des revendications 14 à 26, **caractérisée en ce qu'**un élément adaptateur (19), notamment en forme de disque, est présent, au moyen duquel le moyeu de roue (15) peut être calé au niveau de l'unité de positionnement (5), en prévoyant de préférence que l'élément adaptateur (19) est vissé au moyeu de roue (15) par le biais de trous taraudés formés par un cercle de trous du moyeu de roue (15) et/ou en prévoyant de préférence que le dispositif de fixage de moyeu de roue (7) possède un logement (135) comprenant un espace d'accueil (137) dans lequel l'élément adaptateur (19) en forme de disque peut être disposé et/ou inséré par une zone de bord latéral (20).

28. Unité de positionnement selon la revendication 27, **caractérisée en ce qu'**un dispositif de serrage (139) est présent, au moyen duquel peut être serré l'élément adaptateur (19) inséré dans l'espace d'accueil (137), en prévoyant de préférence que le dispositif de serrage (139) possède un mécanisme à genouillère (145) et/ou un dispositif d'actionnement (141), notamment hydraulique et/ou pneumatique.
